# EUROPÄISCHE PATENTSCHRIFT

(11) **EP 3 963 219 B1**
(45) Veröffentlichungstag und Bekanntmachung des Hinweises auf die Patenterteilung: **13.08.2025**
(21) Anmeldenummer: 20724026.8
(22) Anmeldetag: 30.04.2020
(51) Int. Cl.: F16B 12/26

(54) **VERBINDUNGSVORRICHTUNG UND MÖBEL**
CONNECTING DEVICE AND FURNITURE
DISPOSITIF D'ASSEMBLAGE ET MEUBLE

(30) Priorität: 03.05.2019 DE 102019206427
(43) Veröffentlichungstag der Anmeldung: 09.03.2022
(73) Patentinhaber: Lamello AG, 4416 Bubendorf (CH)
(72) Erfinder: SEILER, Philipp, 4424 Arboldswil (CH); JEKER, Patrick, 4225 Brislach (CH); HÄNNI, Samuel, 4852 Rothrist (CH); BAUR, Franz, 87534 Oberstaufen (DE); HASER, Franz Josef, 87534 Oberstaufen (DE)
(74) Vertreter: DTS Patent- und Rechtsanwälte PartmbB
(86) Internationale Anmeldenummer: PCT/EP2020/061998
(87) Internationale Veröffentlichungsnummer: WO 2020/225079

(56) Entgegenhaltungen:
- EP-A1- 3 385 545
- WO-A1-2012/095454
- WO-A2-2014/060608
- CN-A- 108 006 027
- DE-A1- 102015 202 593
- DE-A1- 19 607 786
- FR-E- 86 990
- US-A- 2 596 940
- US-A- 2 836 215
- US-A1- 2017 114 812

## Beschreibung

Die vorliegende Erfindung betrifft eine Verbindungsvorrichtung zum Verbinden eines ersten Bauteils mit einem zweiten Bauteil, insbesondere zum Verbinden von Möbel- oder Maschinenteilen. Ferner betrifft die vorliegende Erfindung eine Verbindungsvorrichtung zum Verbinden eines Bauteils mit einem Objekt.

Zudem betrifft die vorliegende Erfindung ein Möbel, beispielsweise einen Schrank, ein Regal, einen Tisch oder sonstige Einrichtungs- und Aufbewahrungsobjekte.

Bei einer beispielsweise aus der EP 1 990 549 A1 bekannten Verbindungsvorrichtung ist vorgesehen, dass diese ein im verbundenen Zustand der Bauteile an dem ersten Bauteil angeordnetes erstes Verbindungselement und ein im verbundenen Zustand der Bauteile an dem zweiten Bauteil angeordnetes zweites Verbindungselement umfasst. Das erste Verbindungselement umfasst einen Grundkörper und ein relativ zu dem Grundkörper des ersten Verbindungselements bewegliches Halteelement zum lösbaren Verbinden des ersten Verbindungselements mit dem zweiten Verbindungselement, wobei das bewegliche Halteelement eine erste Haltekontur umfasst, wobei das zweite Verbindungselement eine zweite Haltekontur umfasst, welche mit der ersten Haltekontur hintergreifbar ist.

Bei der Verbindungsvorrichtung aus der EP 1 990 549 A1 ist ein erstes der Verbindungselemente mit feststehenden Einsteckvorsprüngen versehen, welche in hierzu komplementäre Aufnahmetaschen eines zweiten der Verbindungselemente einsteckbar sind. Die Einsteckvorsprünge müssen hierzu in einem vormontierten Zustand des ersten Verbindungselements, in welchem das erste Verbindungselement in oder an einem Bauteil festgelegt ist, aus dem Bauteil herausragen. Werden nun die Einsteckvorsprünge in die Aufnahmetaschen eingesteckt, ergibt sich eine seitliche Fixierung der Bauteile in einer senkrecht zur Verbindungsrichtung der Verbindungselemente verlaufenden Ebene. So wünschenswert diese seitliche Fixierung zur zuverlässigen Vorpositionierung in vielen Fällen ist, so störend kann sie jedoch in anderen Fällen sein, beispielsweise dann, wenn ein Bauteil längs der vorstehend genannten Ebene an dem weiteren Bauteil anliegend verschoben werden muss, um die beiden Bauteile korrekt zu positionieren und erst dann relativ zueinander zu fixieren. Die herausragenden Einsteckvorsprünge würden ein derartiges Verschieben unmöglich machen.

Weitere Beispiele aus dem Stand der Technik sind beispielsweise beschrieben in EP 3 385 545 A1, CN 108 006 027 A, DE 10 2015 202593 A1, WO 2012/095454 A1, DE 196 07 786 A1, WO 2014/060608 A2, US 2017/114812 A1, US 2 836 215 A und FR 86 990 E.

Der vorliegenden Erfindung liegt die Aufgabe zugrunde, eine Verbindungsvorrichtung bereitzustellen, welche eine zuverlässige Vorpositionierung ermöglicht, ohne eine Bewegungsfreiheit der miteinander zu verbindenden Bauteile und/oder Gegenstände während der Montage und/oder des Verbindungsvorgangs zu stark einzuschränken.

Diese Aufgabe wird erfindungsgemäß durch eine Verbindungsvorrichtung gemäß Anspruch 1 gelöst.

Gemäß der vorliegenden Verbindung können zwei Verbindungselemente, insbesondere ein erstes Verbindungselement und ein zweites Verbindungselement, der Verbindungsvorrichtung vorgesehen sein. Alternativ hierzu kann jedoch auch nur ein einziges Verbindungselement der Verbindungsvorrichtung vorgesehen sein. Dieses eine Verbindungselement ist dann dasjenige Verbindungselement, welches auch als "erstes Verbindungselement" bezeichnet wird. Das auch als "zweites Verbindungselement" bezeichnete Verbindungselement wird in diesem Fall funktional durch ein beliebig ausgebildetes Gegenstück, beispielsweise ein Objekt oder ein Bauteil, gebildet, wobei dieses Gegenstück dann insbesondere einen Abschnitt aufweist, in welchen ein oder mehrere Federelemente hinein ausfedern können und/oder an welchem ein oder mehrere Federelemente und/oder Halteelemente angreifen können.

Zur Verallgemeinerung wird daher jedes mit dem Verbindungselement verbindbare Gegenstück als "Partnerverbindungselement" bezeichnet, wobei dieses Partnerverbindungselement ein weiteres Verbindungselement der Verbindungsvorrichtung oder ein Teil oder Abschnitt eines Bauteils oder Objekts sein kann.

Ein Partnerverbindungselement weist optional einzelne oder mehrere der im Zusammenhang mit dem Verbindungselement beschriebenen Merkmale und/oder Vorteile auf. Insbesondere können die in Bauteilen versenkt anordenbaren Abschnitte des Partnerverbindungselements, insbesondere ein oder mehrere Haltevorsprünge, denjenigen des Verbindungselements entsprechen.

Ein oder mehrere Verbindungselemente der Verbindungsvorrichtung umfassen insbesondere jeweils einen Grundkörper.

Der Grundkörper eines Verbindungselements ist insbesondere ein Gehäuse des Verbindungselements.

Die Verbindungsrichtung der Verbindungsvorrichtung ist insbesondere diejenige Richtung, in welcher die Verbindungselemente und/oder die Bauteile aufeinander zubewegt werden, um die Bauteile miteinander zu verbinden.

Alternativ oder ergänzend hierzu ist die Verbindungsrichtung insbesondere senkrecht zu Oberflächen des einen oder mehreren Bauteile und/oder des einen oder der mehreren Objekte, an welchen diese aneinander anliegen, ausgerichtet.

Die Verbindungsrichtung ist insbesondere diejenige Richtung in welcher eine zwischen dem Verbindungselement und dem Partnerverbindungselement wirkende effektive Kraft wirkt, um die Verbindung zwischen den Bauteilen oder Objekten herzustellen.

Vorzugsweise umfasst mindestens ein Verbindungselement ein Gehäuse und mindestens ein relativ zu dem Gehäuse bewegliches Halteelement.

Es kann vorgesehen sein, dass das Halteelement in einer Haltestellung so mit dem Partnerverbindungselement, insbesondere einem weiteren Verbindungselement, beispielsweise dem zweiten Verbindungselement, und/oder einem Bauteil oder Objekt, zusammenwirkt, dass eine Relativbewegung des Verbindungselements und des Partnerverbindungselement und/oder des mindestens einen Bauteils und/oder des mindestens einen Objekts längs einer Verbindungsrichtung verhindert wird.

Insbesondere kann vorgesehen sein, dass das Halteelement in einer Freigabestellung eine Relativbewegung des Verbindungselements und des Partnerverbindungselements und/oder des mindestens einen Bauteils und/oder des mindestens einen Objekts längs der Verbindungsrichtung zulässt.

Mindestens ein Halteelement ist vorzugsweise durch eine Einwirkung von außerhalb der Verbindungsvorrichtung relativ zu einem Gehäuse des Verbindungselements von der Haltestellung in die Freigabestellung und/oder von der Freigabestellung in die Haltestellung bewegbar.

Das Gehäuse des Verbindungselements weist insbesondere eine gekrümmte Anlagefläche, die in einem Längsschnitt kreisbogenförmig ist, und eine dieser Anlagefläche gegenüberliegende im Wesentlichen ebene Anlagefläche, die dem weiteren Verbindungselement und/oder Bauteil und/oder Objekt zugewandt ist, auf.

Das Halteelement ist insbesondere schwenkbar an dem Verbindungselement angeordnet. Die Rotationsachse des Halteelements ist vorzugsweise im Wesentlichen senkrecht zur Verbindungsrichtung ausgerichtet.

Der Grundkörper des Verbindungselements, insbesondere ein Gehäuse des Verbindungselements, weist vorzugsweise eine Durchtrittsöffnung auf, durch welche das Halteelement mit einem Werkzeug, insbesondere einem Inbusschlüssel, zugänglich ist.

Die Rotationsachse des Halteelements ist vorzugsweise eine Mittelachse der Durchtrittsöffnung.

Das Halteelement weist insbesondere eine Betätigungsöffnung auf, an welcher ein Werkzeug angreift, um das Halteelement zu betätigen.

Die Betätigungsöffnung ist insbesondere durch eine Seitenwandung des Grundkörpers, insbesondere des Gehäuses, zugänglich.

Es kann vorgesehen sein, dass das Partnerverbindungselement mindestens zwei zweite Haltekonturen umfasst, welche in Seitenwandungen eines Grundkörpers des Partnerverbindungselements eingeformt und/oder daran angeordnet sind.

Insbesondere kann vorgesehen sein, dass jeweils eine zweite Haltekontur in jeweils eine Seitenwandung eines Grundkörpers des Partnerverbindungselements eingeformt ist.

Die zwei zweiten Haltekonturen sind vorzugsweise auf einander zugewandten Innenseiten der zwei Seitenwandungen des Grundkörpers des Partnerverbindungselements angeordnet.

Vorteilhaft kann es sein, wenn das bewegliche Halteelement mindestens zwei erste Haltekonturen umfasst, welche insbesondere auf einander gegenüberliegenden Seiten eines Zentralabschnitts des Halteelements angeordnet sind.

Bei einer Ausgestaltung der Erfindung kann vorgesehen sein, dass das bewegliche Halteelement mindestens zwei erste Haltekonturen umfasst und dass das Partnerverbindungselement mindestens zwei zweite Haltekonturen umfasst, welche in Seitenwandungen eines Grundkörpers des Partnerverbindungselement eingeformt und mit den ersten Haltekonturen hintergreifbar sind, wobei das bewegliche Halteelement zwischen den zwei Seitenwandungen anordenbar oder angeordnet ist.

Insbesondere kann vorgesehen sein, dass das bewegliche Halteelement in einen Zwischenraum zwischen den zwei Seitenwandungen des Grundkörpers des Partnerverbindungselements einbringbar und aus demselben entfernbar ist.

Das Halteelement ist vorzugsweise zwischen die zwei zweiten Haltekonturen einbringbar, insbesondere um die zwei zweiten Haltekonturen mittels der zwei ersten Haltekonturen zu hintergreifen.

Mindestens ein Grundkörper mindestens eines Verbindungselements ist vorzugsweise als ein Kunststoff-Spritzgussbauteil ausgebildet.

Günstig kann es sein, wenn das Verbindungselement und das Partnerverbindungselement im verbundenen Zustand der Bauteile lösbar miteinander verbunden sind.

Mindestens ein Verbindungselement der Verbindungsvorrichtung wird in eine an dem mindestens einen Bauteil bereits vorhandene Nut eingebracht, so dass insbesondere kein hoher Kraftaufwand zum Einbringen des Verbindungselements in die Bauteile erforderlich ist und daher keine Gefahr einer Beschädigung des Bauteils besteht.

Im verbundenen Zustand ist die im Wesentlichen ebene Anlegefläche des Verbindungselements und/oder des Partnerverbindungselements im Wesentlichen senkrecht zur Verbindungsrichtung ausgerichtet.

Die gekrümmte Anlagefläche mindestens eines Verbindungselements kann insbesondere im Wesentlichen kreiszylindermantelausschnittsförmig ausgebildet sein.

Die erste Haltekontur und/oder die zweite Haltekontur können insbesondere bogenförmig ausgebildet sein.

Insbesondere kann vorgesehen sein, dass die erste Haltekontur und die zweite Haltekontur nicht konzentrisch zueinander ausgebildet sind, so dass das Verbindungselement und das Partnerverbindungselement beim Bewegen des Halteelements von der Freigabestellung in die Haltestellung gegeneinander gezogen werden.

Beispielsweise kann vorgesehen sein, dass mindestens ein Halteelement mittels eines von außerhalb des Verbindungselements mit dem Halteelement in Eingriff bringbaren mechanischen Betätigungsmittels von der Haltestellung in die Freigabestellung und/oder von der Freigabestellung in die Haltestellung bewegbar ist.

Hierfür ist es günstig, wenn mindestens ein Halteelement eine Aufnahme, insbesondere eine Betätigungsöffnung, für einen Betätigungsabschnitt eines mechanischen Betätigungsmittels aufweist.

Insbesondere kann vorgesehen sein, dass mindestens ein Halteelement eine Aufnahme, insbesondere eine Betätigungsöffnung, für einen Mehrkantschlüssel, einen Inbusschlüssel und/oder einen Schraubendreher aufweist.

Um eine Einwirkung des mechanischen Betätigungsmittels auf das Halteelement zu ermöglichen, kann vorgesehen sein, dass das Verbindungselement ein Gehäuse mit einer Durchtrittsöffnung für den Durchtritt eines mechanischen Betätigungsmittels zu einem Halteelement umfasst.

Insbesondere kann vorgesehen sein, dass das Gehäuse eine sich quer zur gekrümmten Anlagefläche des Verbindungselements erstreckende Seitenwand aufweist und die Durchtrittsöffnung in der Seitenwand angeordnet ist.

Alternativ hierzu kann auch vorgesehen sein, dass die Durchtrittsöffnung an der gekrümmten Anlagefläche des Verbindungselements angeordnet ist.

Um eine besonders wirksame Verankerung mindestens eines der Verbindungselemente in dem zugehörigen Bauteil zu erreichen, kann vorgesehen sein, dass mindestens eines der Verbindungselemente mit mindestens einem Haltevorsprung versehen ist, der eine gekrümmte Abstützfläche aufweist, welche in einem Längsschnitt kreisbogenförmig ist.

Mit dieser gekrümmten Abstützfläche kann sich der Haltevorsprung an einer ebenfalls gekrümmten Hinterschneidungsfläche eines Hinterschneidungsabschnitts einer Nut in dem zugehörigen Bauteil abstützen, wobei diese Hinterschneidungsfläche ebenfalls in einem Längsschnitt kreisbogenförmig ist und denselben Krümmungsradius aufweist wie die gekrümmte Abstützfläche des Haltevorsprungs. Durch den Eingriff zwischen dem Haltevorsprung und dem Hinterschneidungsabschnitt der Nut ergibt sich eine formschlüssige Verbindung zwischen dem Bauteil und dem Verbindungselement.

Der Haltevorsprung der erfindungsgemäßen Verbindungsvorrichtung ist vorzugsweise nicht selbstschneidend ausgebildet.

Vielmehr ist der Haltevorsprung vorzugsweise dafür vorgesehen, in eine bereits vor dem Einbringen des Verbindungselements in das Bauteil hergestellte Nut mit einem Hinterschneidungsabschnitt in dem betreffenden Bauteil in der Längsrichtung der Nut eingeschoben zu werden. In diesem Fall lässt sich der Haltevorsprung mit geringem Kraftaufwand in dem Hinterschneidungsabschnitt der Nut in Tangentialrichtung verschieben, so dass das Verbindungselement in dieser Richtung noch einen Bewegungsfreiheitsgrad besitzt und somit beim Verbinden der Bauteile noch Korrekturen bezüglich der gegenseitigen Positionen möglich sind.

Der Haltevorsprung kann insbesondere stumpfe Enden und/oder abgerundete Einlaufschrägen an seinen Endbereichen aufweisen.

Ein nicht-selbstschneidender Haltvorsprung kann eine beliebig große Querschnittsfläche aufweisen, um die mechanische Stabilität des Haltevorsprungs zu erhöhen.

Insbesondere kann die Querschnittsfläche des Haltevorsprungs mindestens 1 mm² betragen.

Der Haltevorsprung kann einen im Wesentlichen rechteckigen oder einen im Wesentlichen trapezförmigen Querschnitt aufweisen.

Alternativ oder ergänzend hierzu kann vorgesehen sein, dass mindestens ein Haltevorsprung sich mit wachsendem Abstand von einem Grundkörper des jeweiligen Verbindungselements verjüngt.

Andererseits kann vorgesehen sein, dass mindestens ein Haltevorsprung sich mit abnehmendem Abstand von einem Grundkörper des jeweiligen Verbindungselements verjüngt.

Alternativ oder ergänzend hierzu ist auch denkbar, dass mindestens ein Haltevorsprung einen Querschnitt mit einer zumindest abschnittsweise gekrümmten Außenkontur aufweist.

Ferner kann vorgesehen sein, dass mindestens ein Haltevorsprung im Wesentlichen flächenbündig an die gekrümmte Anlagefläche des jeweiligen Verbindungselements angrenzt. In diesem Fall ist der Haltevorsprung also an dem dem Nutgrund zugewandten äußersten Rand des zugehörigen Verbindungselements angeordnet.

Alternativ oder ergänzend hierzu kann auch vorgesehen sein, dass mindestens ein Haltevorsprung gegenüber der gekrümmten Anlagefläche des jeweiligen Verbindungselements versetzt angeordnet ist. Der Haltevorsprung kann also insbesondere einen kleineren Krümmungsradius aufweisen als die gekrümmte Anlagefläche des jeweiligen Verbindungselements.

Ferner kann vorgesehen sein, dass an demselben Verbindungselement mehrere Haltevorsprünge angeordnet sind, welche unterschiedliche Krümmungsradien aufweisen. Insbesondere können mehrere Haltevorsprünge mit unterschiedlichen Krümmungsradien auf derselben Seite des jeweiligen Verbindungselements angeordnet sein.

Alternativ oder ergänzend zu einer Verankerung der Verbindungselemente mittels eines oder mehrerer Haltevorsprünge kann auch vorgesehen sein, dass mindestens eines der Verbindungselemente mit mindestens einem Verankerungselement zum Festlegen des betreffenden Verbindungselements an einem Nutgrund einer in einem der Bauteile vorgesehenen Nut versehen ist.

Ferner kann vorgesehen sein, dass mindestens eines der Verbindungselemente mit mindestens einer Verankerungsschraube zum Festlegen des betreffenden Verbindungselements an einem der Bauteile versehen ist.

Gemäß der vorliegenden Erfindung umfasst die Verbindungsvorrichtung ein Verbindungselement, welches einen in einem Bauteil anordenbaren Grundkörper umfasst, sowie ein oder mehrere Federelemente zur Herstellung einer Verbindung mit einem Gegenstück.

Mittels des einen oder der mehreren Federelemente kann insbesondere eine Positionierung eines Bauteils relativ zu einem weiteren Bauteil und/oder einem Gegenstand vorgenommen werden.

Günstig kann es sein, wenn ein oder mehrere Federelemente in eine oder mehrere Öffnungen in einem Partnerverbindungselement einbringbar sind. Das Partnerverbindungselement kann insbesondere ein weiteres Verbindungselement der Verbindungsvorrichtung oder aber ein Bestandteil eines Bauteils und/oder eines Objekts sein.

Erfindungsgemäß ist vorgesehen, dass das eine oder die mehreren Federelemente jeweils einen Federabschnitt aufweisen, welcher von dem Grundkörper weg ragt.

Erfindungsgemäß ist vorgesehen, dass das eine oder die mehreren Federelemente jeweils einen Stabilisierungsabschnitt aufweisen. Der Stabilisierungsabschnitt erstreckt sich ausgehend von einem Federabschnitt in Richtung des Grundkörpers.

Der Federabschnitt ragt von dem Grundkörper weg, und es kann günstig sein, wenn einem dem Grundkörper abgewandten Ende des Federabschnitts an den Stabilisierungsabschnitt angrenzt.

Es ist vorgesehen, dass der Stabilisierungsabschnitt sich ausgehend von dem dem Grundkörper abgewandten Ende des Federabschnitts in Richtung des Grundkörpers erstreckt. Hierdurch kann insbesondere ein dem Grundkörper abgewandtes Ende des Federabschnitts effizient stabilisiert werden, insbesondere gegen unerwünschte Seitwärtsbewegungen des dem Grundkörper abgewandten Endes des Federabschnitts relativ zum Grundkörper.

Der Stabilisierungsabschnitt erstreckt sich vorzugsweise in einem entspannten Zustand des Federelements bis in den Grundkörper hinein.

Insbesondere kann vorgesehen sein, dass der Stabilisierungsabschnitt einen beispielsweise quaderförmigen Fußabschnitt aufweist. Dieser Fußabschnitt ist insbesondere an einem dem Federabschnitt abgewandten Ende des Stabilisierungsabschnitts angeordnet und relativ zu dem Grundkörper beweglich. Der Fußabschnitt und/oder der Stabilisierungsabschnitt sind vorzugsweise so angeordnet und/oder dimensioniert, dass in einem entspannten Zustand des Federelements der Fußabschnitt des Stabilisierungsabschnitts mit mindestens ungefähr 10 %, vorzugsweise mindestens ungefähr 30 %, seiner Höhe längs einer Verbindungsrichtung der Verbindungsvorrichtung in den Grundkörper hineinragt. Hierdurch kann eine seitliche Überlappung des Stabilisierungsabschnitts mit dem Grundkörper erzielt werden, wodurch eine unerwünschte Seitwärtsbewegung des Federelements beim Einfedern desselben vorzugsweise verhindert oder zumindest minimiert werden kann.

Alternativ oder ergänzend hierzu kann vorgesehen sein, dass der Stabilisierungsabschnitt in einem entspannten Zustand des Federelements mit mindestens ungefähr 2 %, vorzugsweise mindestens ungefähr 5 %, beispielsweise mindestens ungefähr 10 %, seiner Höhe längs einer Verbindungsrichtung der Verbindungsvorrichtung in den Grundkörper hineinragt.

Ferner kann alternativ oder ergänzend hierzu vorgesehen sein, dass der Fußabschnitt und/oder der Stabilisierungsabschnitt in einem entspannten Zustand des Federelements mit höchstens ungefähr 50 %, vorzugsweise höchstens ungefähr 30 %, beispielsweise höchstens ungefähr 10 %, seiner Höhe längs einer Verbindungsrichtung der Verbindungsvorrichtung in den Grundkörper hineinragt.

Erfindungsgemäß ist vorgesehen, dass der Grundkörper mindestens eine Federaufnahme **zur Aufnahme** mindestens eines Federelements als Ganzes aufweist.

Die Federaufnahme ist insbesondere eine von zwei Seitenwänden des Grundkörpers umgebene Vertiefung oder Durchtrittsöffnung in dem Grundkörper, insbesondere an einer Oberseite des Grundkörpers.

Eine Oberseite des Grundkörpers ist insbesondere diejenige Seite, von welcher ein oder mehrere Federelemente wegragen.

Insbesondere ist die Oberseite des Grundkörpers des Verbindungselements, diejenige Seite, welche im verbundenen Zustand der Verbindungsvorrichtung dem Partnerverbindungselement zugewandt angeordnet ist.

Günstig kann es sein, wenn der Stabilisierungsabschnitt, insbesondere ein Fußabschnitt, des mindestens einen Federelements in einer senkrecht zu einer Verbindungsrichtung der Verbindungsvorrichtung verlaufenden Richtung und/oder in einer Querrichtung des Verbindungselements eine Breite aufweist, welche mindestens ungefähr 90 %, insbesondere mindestens ungefähr 95 %, einer Breite der zugehörigen Federaufnahme beträgt.

Die Querrichtung ist dabei insbesondere diejenige Richtung, welche senkrecht zu ebenen Seitenflächen von Seitenwandungen des Grundkörpers des Verbindungselements ausgerichtet ist.

Insbesondere ist die Querrichtung parallel zu einer Rotationsachse eines Halteelements.

Alternativ oder ergänzend hierzu kann die Querrichtung diejenige Richtung sein, welche senkrecht zu einer Einschubrichtung ist, längs welcher das Verbindungselement in eine in einem Bauteil angeordnete Nut einschiebbar ist.

Ferner ist die Querrichtung insbesondere eine senkrecht zu einer maximalen Längserstreckung des Verbindungselements verlaufende Richtung.

Eine Breite der Federaufnahme ist insbesondere eine lichte Breite der Federaufnahme.

Günstig kann es sein, wenn der Federabschnitt und der Stabilisierungsabschnitt einstückig miteinander ausgebildet und/oder hergestellt sind.

Es kann jedoch auch vorgesehen sein, dass der Federabschnitt und der Stabilisierungsabschnitt aus voneinander verschiedenen Materialien und/oder in voneinander verschiedenen Herstellungsschritten hergestellt und anschließend miteinander verbunden sind.

Insbesondere können der Federabschnitt und der Stabilisierungsabschnitt als einstückiges Spritzgussbauteil, beispielsweise Kunststoff-Spritzgussbauteil, ausgebildet sein. Alternativ hierzu kann vorgesehen sein, dass der Federabschnitt und/oder der Stabilisierungsabschnitt Bestandteil eines metallischen Elements, insbesondere eines Blechbiegeteils, sind.

Der Federabschnitt und der Stabilisierungsabschnitt gehen vorzugsweise in einem Federvorsprung des Federelements ineinander über. Der Federvorsprung ist vorzugsweise ein maximal von dem Grundkörper entferntes Ende des Federelements, insbesondere in einem entspannten Zustand des Federelements.

Der entspannte Zustand des Federelements ist insbesondere ein maximal ausgefederter Zustand und/oder ein Zustand, in welchem das Federelement keine oder eine minimale Federspannung aufweist.

Der Federvorsprung ist vorzugsweise eine Federkuppe, welche insbesondere einseitig, zweiseitig, dreiseitig oder vierseitig abgerundet oder abgeschrägt ist.

Beispielsweise kann vorgesehen sein, dass eine dem Grundkörper abgewandte Oberseite des Federvorsprungs abgerundet und/oder abgeschrägt ist. Insbesondere ist an dieser Oberseite eine einseitige, zweiseitige, dreiseitige oder vierseitige Abrundung oder Abschrägung vorgesehen.

Eine Abrundung und/oder Abschrägung kann insbesondere den Vorteil bieten, dass das Federelement aus einer Öffnung in einem Partnerverbindungselement durch einfaches Verschieben des Verbindungselements relativ zu dem Partnerverbindungselement in Richtung derjenigen Seite, an welcher die Abrundung oder Abschrägung vorgesehen ist, herausbewegt werden kann. Durch geeignete Auswahl der Anzahl der Abrundungen oder Abschrägungen kann eine solche einfache Herausbewegung des Federelements aus einer Öffnung im Partnerverbindungselement entweder in sämtlichen Richtungen, insbesondere senkrecht zur Verbindungsrichtung, oder aber nur in einzelnen Richtungen, insbesondere senkrecht zur Verbindungsrichtung erfolgen. Beispielsweise kann durch nur dreiseitige Abrundung oder Abschrägung eine in genau einer Bewegungsrichtung unlösbare Festlegung des Federelements in einer Öffnung des Partnerverbindungselements vorgesehen sein.

Günstig kann es sein, wenn das Federelement als Ganzes, insbesondere zumindest in dem in eine Öffnung in einem Partnerverbindungselement hineinragenden Teil des Federelements, sich ausgehend von dem Federvorsprung, das heißt ausgehend von dem maximal von dem Grundkörper entfernten Ende des Federelements, in Richtung des Grundkörpers erweitert, insbesondere in einer, zwei, drei, vier oder sämtlichen senkrecht zur Verbindungsrichtung verlaufenden Richtungen.

Alternativ oder ergänzend hierzu kann vorgesehen sein, dass das Federelement, insbesondere ein in eine Öffnung in einem Partnerverbindungselement hineinragender Teil des Federelements, sich ausgehend von dem Grundkörper verjüngt, insbesondere stetig verjüngt.

Eine, zwei, drei, vier oder sämtliche Flanken des Federelements sind vorzugsweise schräg zu der Verbindungsrichtung angeordnet und/oder ausgerichtet.

Alternativ oder ergänzend hierzu können eine, zwei, drei oder alle vier Flanken des Federelements zumindest näherungsweise parallel zur Verbindungsrichtung ausgerichtet sein.

Die Federkuppe ist insbesondere derart abgerundet, dass in einem entspannten Zustand des Federelements und/oder in einem eingefederten Zustand des Federelements, in welchem dieses im Wesentlichen vollständig in dem Grundkörper angeordnet ist, und/oder in sämtlichen dazwischenliegenden Zuständen ein Anlageabschnitt der Federkuppe, mit welcher die Federkuppe insbesondere vor einem Ausfedern in eine Öffnung in dem Partnerverbindungselement gegen das Partnerverbindungselement, insbesondere gegen ein weiteres Verbindungselement, ein Bauteil und/oder ein Objekt, presst, einen Krümmungsradius von mindestens ungefähr 2 mm, vorzugsweise mindestens ungefähr 5 mm, aufweist. Hierdurch kann insbesondere eine unerwünschte Beschädigung des Partnerverbindungselements, insbesondere eines weiteren Verbindungselements, des Bauteils und/oder des Objekts, vermieden werden.

Alternativ oder ergänzend hierzu können eine, zwei, drei, vier oder sämtliche Flanken des Federelements abgerundet und/oder abgeschrägt ausgebildet sein, insbesondere um eine unerwünschte Beschädigung von Kanten und Vorsprüngen an einem Partnerverbindungselement, insbesondere einem weiteren Verbindungselement, einem Bauteil- und/oder einem Objekt, zu vermeiden.

Günstig kann es sein, wenn ein Halteelement des Verbindungselements mit mindestens einem Federelement des Verbindungselements in Eingriff bringbar ist, insbesondere derart, dass das mindestens eine Federelement durch Bewegen des Halteelements von der Haltestellung in die Freigabestellung aus einem entspannten Zustand des mindestens einen Federelements in einen eingefederten Zustand bringbar ist, insbesondere in eine vollständig innerhalb des Grundkörpers angeordnete Position.

Das eine oder die mehreren Federelemente sind somit insbesondere durch Betätigen des Halteelements selbst betätigbar.

Beispielsweise kann vorgesehen sein, dass das Halteelement ein oder mehrere Eingriffsabschnitte aufweist, welche an dem einen oder den mehreren Federelementen angreifen, um diese zu betätigen, insbesondere aus einem entspannten Zustand in einen eingefederten Zustand zu bringen.

Alternativ oder ergänzend zu einer Betätigung des mindestens einen Federelements mittels eines Halteelements kann auch eine anderweitige, von dem Halteelement unabhängige Betätigung des mindestens einen Federelements vorgesehen sein. Insbesondere kann eine mechanische Betätigung oder aber eine magnetische Betätigung vorgesehen sein, insbesondere um das eine oder die mehreren Federelemente aus einem entspannten Zustand in einen eingefederten Zustand, in welchem das mindestens eine Federelement insbesondere vollständig in dem Grundkörper angeordnet ist, zu bringen.

Günstig kann es sein, wenn der Federabschnitt als eine Blattfeder ausgebildet ist oder eine Blattfeder umfasst.

Unter einer Blattfeder ist insbesondere ein Federelement zu verstehen, welches zwei einander gegenüberliegende Breitseiten und zwei einander gegenüberliegende Schmalseiten aufweist, wobei sämtliche Breitseiten und sämtliche Schmalseiten die beiden Enden des Federabschnitts miteinander verbinden. Die Breitseiten weisen dabei vorzugsweise eine Breite senkrecht zur Haupterstreckungsrichtung der Blattfeder auf, welche mindestens das Doppelte, vorzugsweise mindestens das Dreifache, beispielsweise mindestens ungefähr das Fünffache, einer Breite der Schmalseiten beträgt. Die Breite ist dabei insbesondere senkrecht zur Haupterstreckungsrichtung genommen.

In einem entspannten Zustand ist der Federabschnitt vorzugsweise gekrümmt ausgebildet.

Günstig kann es sein, wenn ein dem Grundkörper zugewandtes Ende des Federabschnitts des Federelements in den Grundkörper übergeht.

Insbesondere kann der Federabschnitt des Federelements in den Grundkörper eingeformt, aus demselben ausgeformt oder gemeinsam mit demselben in Form gebracht sein.

Ein dem Grundkörper zugewandtes Ende des Federabschnitts ist vorzugsweise derart an dem Grundkörper angeordnet, dass eine Seitenfläche des Federabschnitts, welche insbesondere eine Oberseite und/oder Breitseite ist, an diesem Ende zumindest näherungsweise parallel zu einer Oberseite des Grundkörpers ist, aus welcher das Federelement hervorragt.

Diese eine Seitenfläche des Federabschnitts ist insbesondere konkav gekrümmt.

Günstig kann es sein, wenn eine Tangente, welche in einem entspannten Zustand des Federelements an dem dem Grundkörper abgewandten Ende des Federabschnitts an einer Breitseite, insbesondere Oberseite, des Federabschnitts angelegt ist, mit einer Oberseite des Grundkörpers, aus welcher das Federelement hervorragt, einen Winkel von mindestens ungefähr 20 °, insbesondere mindestens ungefähr 30 °, und/oder höchstens ungefähr 70 °, vorzugsweise höchstens ungefähr 55 °, einschließt.

Vorteilhaft kann es sein, wenn eine Oberseite des Federabschnitts an einem dem Grundkörper zugewandten Ende des Federabschnitts zumindest näherungsweise bündig mit einer Oberseite des Grundkörpers ist oder unterhalb einer Oberseite des Grundkörpers angeordnet ist. Diese Oberseite des Federabschnitts ist insbesondere eine Breitseite eines als Blattfeder ausgebildeten Federabschnitts.

Es kann vorgesehen sein, dass der Federabschnitt vollständig außerhalb einer Außenkontur des Grundkörpers angeordnet ist.

Vorzugsweise ist jedoch vorgesehen, dass der Federabschnitt in eine Außenkontur des Grundkörpers hineinragt.

Ferner ist vorzugsweise vorgesehen, dass eine oder mehrere seitlich an den Federabschnitt angrenzende Seitenwandungen des Grundkörpers eine oder mehrere Ausnehmungen aufweisen, welche insbesondere zumindest näherungsweise komplementär zu einer Form des Federabschnitts in demjenigen Bereich ausgebildet sind, in welchem der Federabschnitt in die Außenkontur des Grundkörpers hineinragt. Hierdurch kann ein breiter Federabschnitt mit entsprechend großer Federstärke und großer Federlänge bereitgestellt werden.

Eine dem Grundkörper zugewandte Unterseite des Federabschnitts weist vorzugweise eine oder mehrere abgeschrägte oder abgerundete Kanten auf, insbesondere an einem oder beiden Übergängen zwischen einer unteren Breitseite des Federabschnitts und einer oder beiden seitlichen Schmalseiten des Federabschnitts.

Die eine oder die mehreren abgeschrägten oder abgerundeten Kanten ermöglichen insbesondere ein widerstandsfreies oder zumindest widerstandsreduziertes Einfedern des Federabschnitts in den Grundkörper, insbesondere ohne ein Verkanten des Federabschnitts an den Wandungen des Grundkörpers.

Günstig kann es sein, wenn der Grundkörper und das eine oder die mehreren Federelemente einstückig miteinander hergestellt sind.

Insbesondere sind der Grundkörper und das eine oder die mehreren Federelemente als ein einstückiges Spritzgussbauteil, insbesondere Kunststoff-Spritzgussbauteil, ausgebildet.

Der Grundkörper und/oder das eine oder die mehreren Federelemente sind insbesondere aus einem glasfaserverstärkten Kunststoffmaterial gebildet oder umfassen ein solches.

Das bewegbare Halteelement kann ebenfalls als ein Spritzgussbauteil, insbesondere ein Kunststoff-Spritzgussbauteil, ausgebildet sein. Vorzugsweise ist das bewegbare Halteelement jedoch aus einem anderen Material gebildet, beispielsweise aus einem metallischen Material. Vorzugsweise ist das bewegbare Halteelement ein Zinkdruckgussbauteil.

Bei einer alternativen Ausgestaltung der Erfindung kann vorgesehen sein, dass der Grundkörper und das eine oder die mehreren Federelemente aus voneinander verschiedenen Materialien gebildet sind. Insbesondere können das eine oder die mehreren Federelemente aus einem metallischen Material gebildet und in den Grundkörper eingebettet oder bei der Herstellung des Grundkörpers umspritzt sein.

Vorteilhaft kann es sein, wenn der Federabschnitt an einem dem Grundkörper zugewandten Endes des Federabschnitts eine Breite aufweist, welche mindestens ungefähr 20 %, vorzugsweise mindestens ungefähr 30 %, einer maximalen Breite des Grundkörpers entspricht.

Die Breite ist dabei insbesondere in einer Richtung genommen, welche senkrecht zu einer Verbindungsrichtung und/oder parallel zu einer Oberseite des Federabschnitts ausgerichtet ist.

Das Verbindungelement umfasst vorzugsweise zwei Federelemente, welche insbesondere bezüglich einer Quermittelebene des Verbindungselements zumindest näherungsweise spiegelsymmetrisch zueinander angeordnet und/oder ausgebildet sind.

Alternativ hierzu kann jedoch auch vorgesehen sein, dass das Verbindungselement lediglich ein einziges Federelement oder mehr als zwei Federelemente umfasst.

Ein bewegbares Halteelement ist längs einer Haupterstreckungsrichtung des Verbindungselements insbesondere zwischen zwei Federelementen angeordnet, sofern zwei solcher Federelemente vorgesehen sind.

Die Verbindungsvorrichtung kann insbesondere ohne oder mit einem Partnerverbindungselement gebildet sein.

Vorzugsweise umfasst das Partnerverbindungselement eine oder mehrere Öffnungen, welche zumindest näherungsweise komplementär zu einer Form einer Oberseite des mindestens einen Federelements ausgebildet sind.

Ferner umfasst das Partnerverbindungselement vorzugsweise eine Haltekontur, welche mittels des optionalen bewegbaren Halteelements hintergreifbar ist. Insbesondere kann vorgesehen sein, dass die Verbindungsvorrichtung das im verbundenen Zustand zweier Bauteile an einem ersten Bauteil angeordnete Verbindungselement und ein im verbundenen Zustand der Bauteile an dem zweiten Bauteil angeordnetes Partnerverbindungselement umfasst.

Insbesondere sind das Verbindungselement und/oder ein Partnerverbindungselement jeweils mit einem oder mehreren Haltevorsprüngen versehen, die jeweils eine gekrümmte Abstützfläche aufweisen, welche in einem Längsschnitt kreisbogenförmig ist.

Mittels dieser Haltevorsprünge sind das Verbindungselement und/oder das Partnerverbindungselement insbesondere in einem oder mehreren Bauteilen oder Objekten festlegbar, vorzugsweise durch Einschieben in eine komplementär hierzu ausgebildete Nut.

Die vorliegende Erfindung betrifft daher auch ein Möbelstück, welches mehrere Bauteile und eine oder mehrere erfindungsgemäße Verbindungsvorrichtungen, umfasst.

Die Bauteile des Möbelstücks sind dabei insbesondere plattenförmige Elemente, insbesondere Holzplatten, welche mittels einer oder mehrerer Verbindungsvorrichtungen miteinander verbunden oder verbindbar sind.

Weitere bevorzugte Merkmale und/oder Vorteile der durch den Patentansprüche definierten Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung eines Verbindungselements einer Verbindungsvorrichtung, wobei ein bewegbares Halteelement in einer Freigabestellung angeordnet ist;
- Fig. 2: eine schematische Seitenansicht der Verbindungselements aus Fig. 1;
- Fig. 3: einen schematischen vertikalen Querschnitt durch das Verbindungselement aus Fig. 3 längs der Linie 3-3 in Fig. 2;
- Fig. 4: einen schematischen vertikalen Querschnitt durch das Verbindungselement aus Fig. 1 längs der Linie 4-4 in Fig. 2;
- Fig. 5: eine schematische Draufsicht auf eine Oberseite des Verbindungselements aus Fig. 1;
- Fig. 6: einen schematischen vertikalen Längsschnitt durch das Verbindungselement aus Fig. 1;
- Fig. 7: eine vergrößerte Darstellung des Bereichs VII in Fig. 6;
- Fig. 8: eine der Fig. 1 entsprechende schematische Darstellung des Verbindungselements aus Fig. 1, wobei das bewegbare Halteelement in einer Haltestellung angeordnet ist;
- Fig. 9: eine der Fig. 2 entsprechende schematische Seitenansicht des Verbindungselements aus Fig. 1, wobei das bewegbare Halteelement in einer Haltestellung angeordnet ist und wobei in gestrichelter Darstellung ein Partnerverbindungselement sowie zwei Bauteile angedeutet sind; und
- Fig. 10: eine der Fig. 6 entsprechende schematische Schnittdarstellung des Verbindungselements aus Fig. 1, wobei das bewegbare Halteelement in einer Haltestellung angeordnet ist.

Gleiche oder funktional äquivalente Elemente sind in sämtlichen Figuren mit denselben Bezugszeichen bezeichnet.

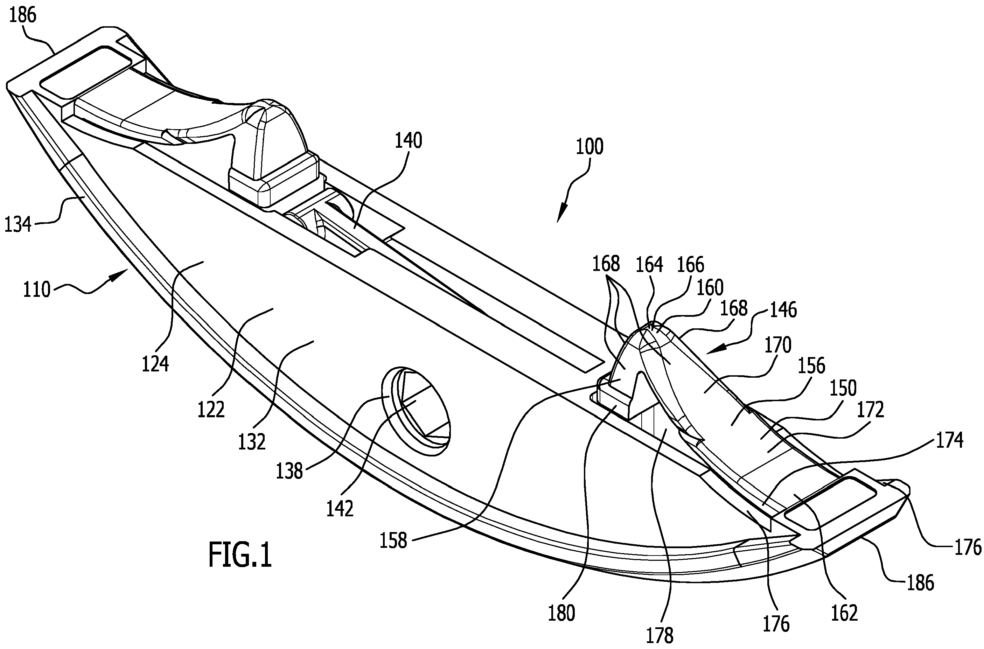

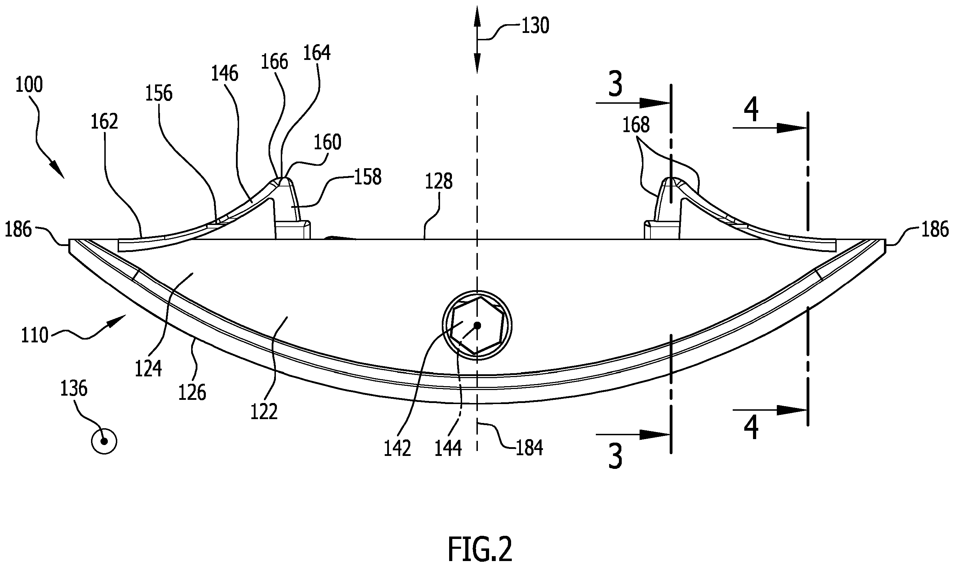

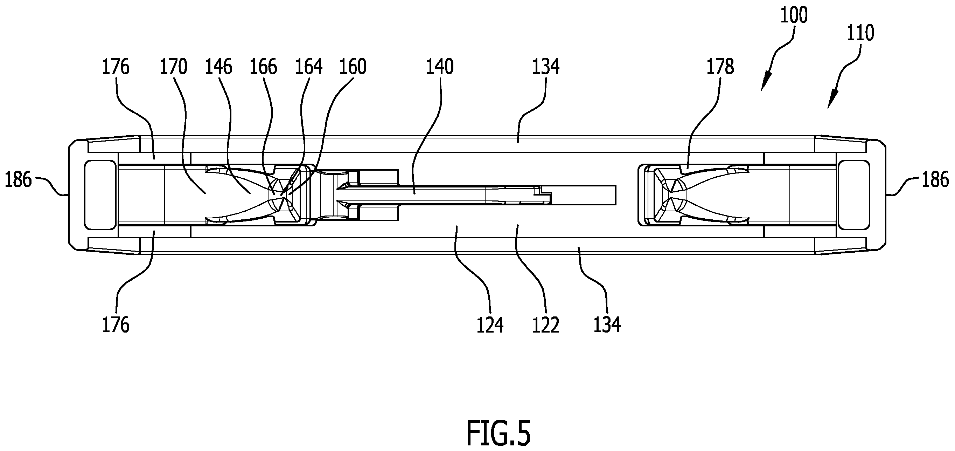

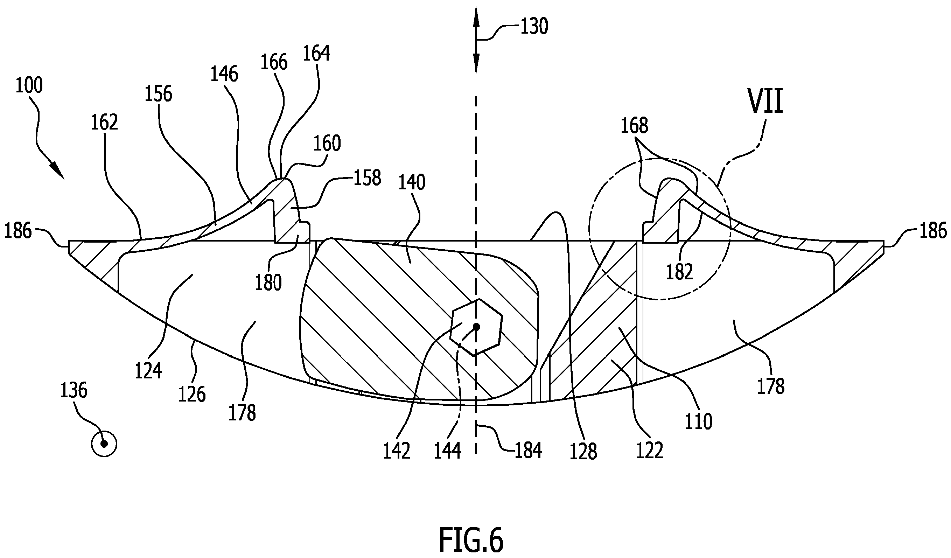

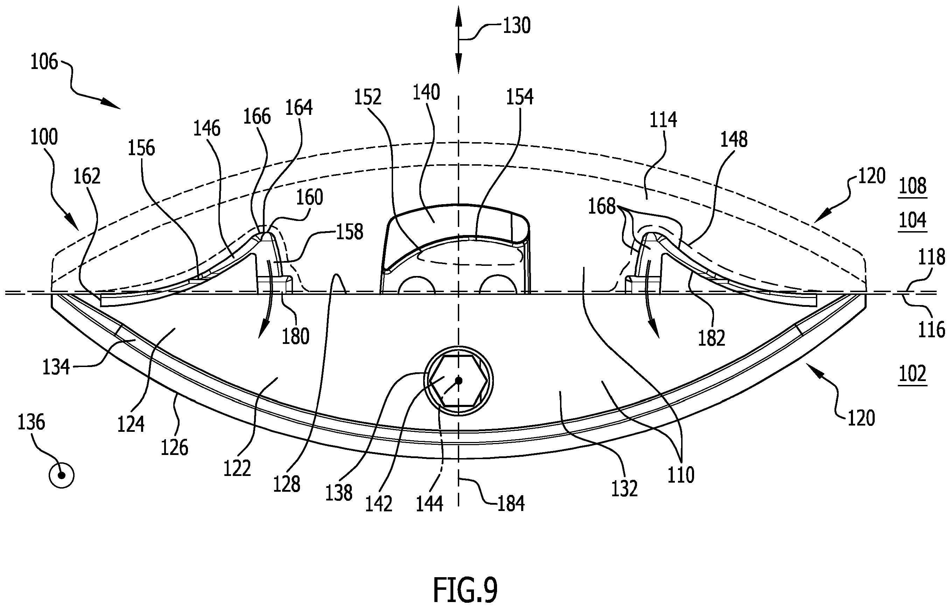

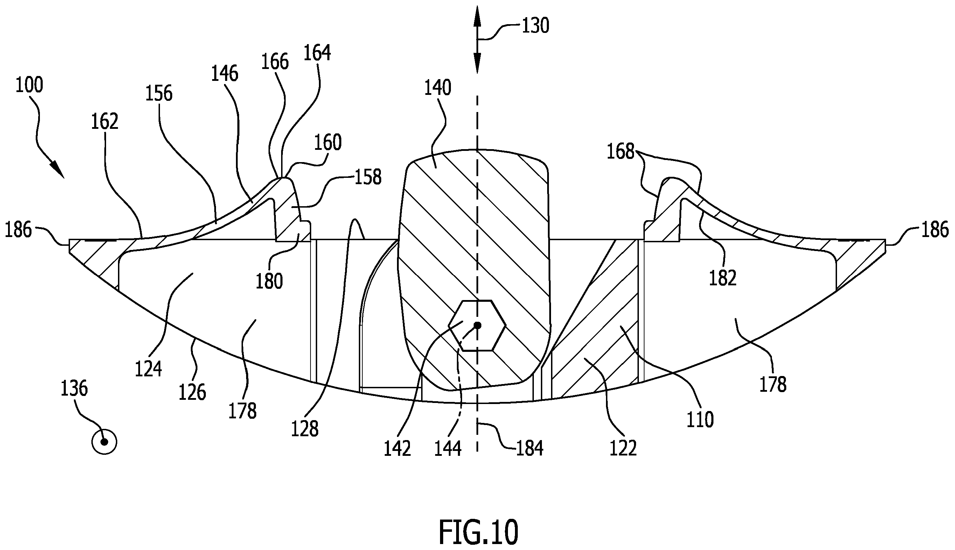

Eine in den Fig. 1 bis 10 dargestellte Ausführungsform einer als Ganzes mit 100 bezeichneten Verbindungsvorrichtung wird im Folgenden am Beispiel einer Verbindung eines ersten, im Wesentlichen plattenförmigen Bauteils 102 mit einem zweiten, ebenfalls im Wesentlichen plattenförmigen Bauteil 104 erläutert (siehe Fig. 9).

Die beiden Bauteile 102 und 104 bestehen beispielsweise aus Holz oder Sperrholz, können aber auch aus beliebigen anderen Materialien, beispielsweise aus einem metallischen Material oder einem Kunststoffmaterial (beispielsweise Plexiglas), bestehen. Ferner kann vorgesehen sein, dass das erste Bauteil 102 und das zweite Bauteil 104 aus voneinander verschiedenen Materialien bestehen.

Die Verbindungsvorrichtung 100 kann insbesondere im Möbelbau zur Herstellung eines Möbels 106, welches mehrere Bauteile 102, 104 umfasst, Verwendung finden.

Die Verbindungsvorrichtung 100 kann jedoch auch zur Verbindung eines Bauteils 102 mit irgendeinem anderen Objekt 108 dienen.

Die Verbindungsvorrichtung 100 umfasst dann insbesondere nur ein Verbindungselement 110, welches unmittelbar mit dem Objekt 108 verbunden oder verbindbar ist.

Ein Gegenstück 112 des Verbindungselements 110 wird daher allgemein als Partnerverbindungselement 114 bezeichnet, insbesondere unabhängig davon, ob dieses Bestandteil der Verbindungsvorrichtung 100 oder aber selbst unter Verwendung der Verbindungsvorrichtung 100 mit dem Bauteil 102 verbindbar oder verbunden ist.

Nachfolgend wird auf die in den Fig. 1 bis 10 dargestellte Ausführungsform näher eingegangen, bei welcher lediglich beispielhaft zwei plattenförmige Bauteile 102, 104 unter Verwendung einer Verbindungsvorrichtung 100 miteinander verbunden sind (siehe insbesondere Fig. 9).

In dem in Fig. 9 angedeuteten montierten Zustand der Bauteile 102, 104 liegt das erste Bauteil 102 mit einer Oberfläche 116 an einer Oberfläche 118 des zweiten Bauteils 104 an. Mittels der Verbindungsvorrichtung 100 sind die Bauteile 102, 104 in dieser Position fixiert. Die Verbindungsvorrichtung 100 umfasst hierzu das Verbindungselement 110 und ein Partnerverbindungselement 114, welche jeweils in komplementär hierzu ausgebildeten Nuten 120 in den beiden Bauteilen 102, 104 angeordnet sind.

Diese Nuten 120 in den Bauteilen 102, 104 können beispielsweise mit der Nutfräsvorrichtung hergestellt werden, welche in der EP 1 990 549 A1 beschrieben ist.

Auch zahlreiche weitere Details zur Herstellung einer Verbindung zwischen zwei Bauteilen 102, 104 unter Verwendung einer Verbindungsvorrichtung 100 sind aus der EP 1 990 549 A1 bekannt.

Das Verbindungselement 110 umfasst vorzugsweise einen Grundkörper 122. Der Grundkörper 122 umfasst ein im Wesentlichen kreiszylinderabschnittsförmiges Gehäuse 124, welches eine bogenförmig gekrümmte Anlagefläche 126, eine der Anlagefläche 126 gegenüberliegende Oberseite 128 und zwei im Wesentlichen parallel zu einer Verbindungsrichtung 130 und im Wesentlichen senkrecht zur Oberseite 128 verlaufende Seitenwandungen 132 umfasst.

Von einem der Anlagefläche 126 zugewandten Randbereich der Seitenwandungen 132 steht jeweils ein bogenförmig gekrümmter Haltevorsprung 134 in einer Querrichtung 136 von der jeweiligen Seitenwandung 132 vor.

Die Querrichtung 136 ist dabei insbesondere im Wesentlichen senkrecht zu den Seitenwandungen 132 ausgerichtet. Ferner ist die Querrichtung 136 insbesondere senkrecht zur Verbindungsrichtung 130 ausgerichtet.

In mindestens einer der Seitenwandungen 132 ist eine Durchtrittsöffnung 138 angeordnet, durch welche ein Halteelement 140 des Verbindungselements 110 zugänglich ist.

Insbesondere ist durch die Durchtrittsöffnung 138 eine Betätigungsöffnung 142 in dem Halteelement 140 zugänglich.

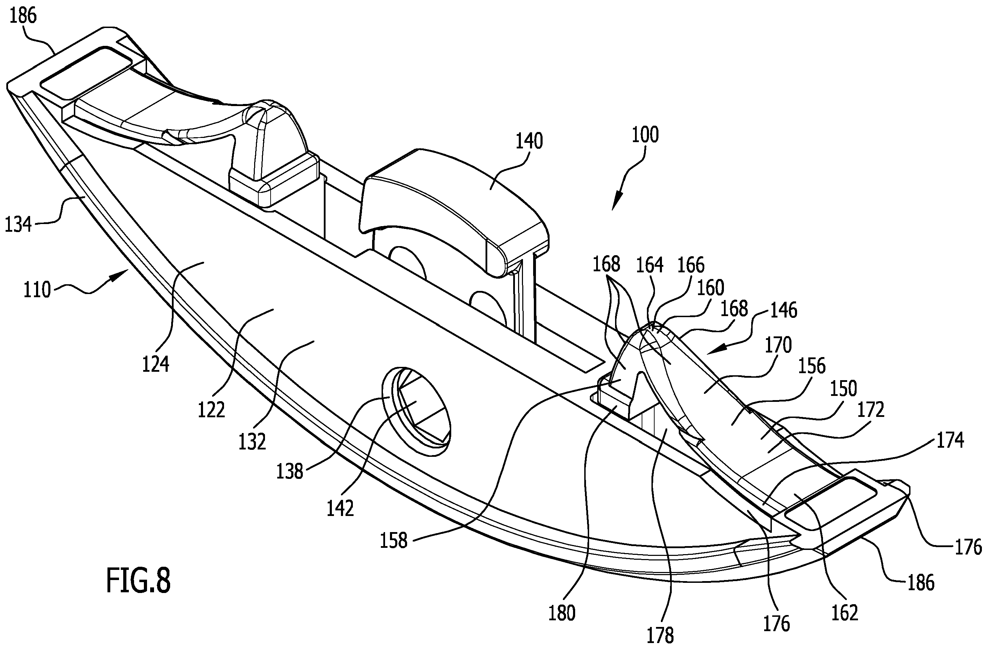

Das Halteelement 140 ist insbesondere um eine Rotationsachse 144 drehbar in dem Grundkörper 122 gehalten, wobei es durch Betätigung mittels eines Werkzeugs, beispielsweise eines Sechskantschlüssels, aus einer Haltestellung (siehe insbesondere die Fig. 8 bis 10) in eine Freigabestellung (siehe insbesondere die Fig. 1, 2 und 6) und zurück bringbar ist.

Die Rotationsachse 144 des Halteelements 140 ist insbesondere parallel zur Querrichtung 136 und/oder senkrecht zur Verbindungsrichtung 130.

Bei der aus der vorstehend genannten Druckschrift EP 1 990 549 A1 müssen die Verbindungselemente zunächst in den Bauteilen 102, 104 festgelegt, insbesondere in die jeweiligen Nuten 120, eingeschoben werden, bevor dann die Bauteile 102, 104 aufeinander gesteckt werden können. Dieser Steckvorgang ist erforderlich, um die permanent aus dem einen Bauteil 102 hervorstehenden Bolzen des Verbindungselements mit zugehörigen Aufnahmen im Gegenstück in Eingriff bringen zu können.

Es gibt nun jedoch auch Anwendungen, bei welchen die Bauteile 102, 104 nicht ohne weiteres ineinander gesteckt oder sonstwie längs der Verbindungsrichtung 130 bewegt werden können, um eine Verbindung herzustellen. Beispielsweise gibt es zahlreiche Anwendungen, bei welchen die Bauteile 102, 104 mit ihren Oberflächen 116, 118 bereits aneinander anliegen und dann relativ zueinander in einer senkrecht zur Verbindungsrichtung 130 verlaufenden Richtung verschoben werden und erst dann fixiert werden können.

Aus einem Verbindungselement 110 und somit über eine Oberfläche 116 des Bauteils 102 hervorragende Teile der Verbindungsvorrichtung 100 stehen einer derartigen Anwendung im Wege.

Bei der in den Fig. 1 bis 10 dargestellten Ausführungsform der Verbindungsvorrichtung 100 sind daher Federelemente 146 vorgesehen, welche in einem entspannten Zustand aus dem Grundkörper 122 des Verbindungselements 110 hervorragen, jedoch in einem eingefederten Zustand in dem Grundkörper 122 angeordnet sind.

Die Federelemente 146 können somit aus einem Bewegungsweg des Bauteils 104 heraus bewegt werden, wenn dieses relativ zu dem Bauteil 102 bewegt wird, während bereits die Oberflächen 116, 118 aneinander anliegen.

In dem Partnerverbindungselement 114, welches insbesondere in dem Bauteil 104 angeordnet ist, sind vorzugsweise eine oder mehrere Öffnungen 148 angeordnet und/oder ausgebildet.

Die Öffnungen 148 können insbesondere zumindest abschnittsweise komplementär zu einer Oberseite 150 eines jeden Federelements 146 ausgebildet sein.

Die Federelemente 146 können somit insbesondere in die Öffnungen 148 hinein ausfedern, sobald die Bauteile 102, 104 in einer vorgegebenen Position relativ zueinander positioniert sind und damit auch das Verbindungselement 110 und das Partnerverbindungselement 114 in einer vorgegebenen Position angeordnet sind.

Die Federelemente 146 können in Wechselwirkung mit den Öffnungen 148 insbesondere eine Vorpositionierung und/oder Vorfixierung der Bauteile 102, 104 relativ zueinander ermöglichen. Insbesondere kann hierdurch eine Montage der Verbindungsvorrichtung 100 als Ganzes und/oder des Möbels 106 als Ganzes vereinfacht werden. Insbesondere kann durch geeignete Auslegung der wirkenden Federkräfte gewährleistet werden, dass die Bauteile 102, 104 schon allein unter Wirkung der Federkräfte der Federelemente 146 in den Öffnungen 148 gehalten werden, insbesondere bis schließlich das Halteelement 140 der Verbindungsvorrichtung 100 aus der beispielsweise in den Fig. 1, 2 und 6 dargestellten Freigabestellung in die in den Fig. 8 bis 10 dargestellte Haltestellung gebracht wurde.

Das Halteelement 140 greift dann insbesondere mittels einer ersten Haltekontur 152 des Halteelements 140 in eine zweite Haltekontur 154 des Partnerverbindungselements 114 ein oder hintergreift diese, wodurch sich letztlich die Arretierung der Verbindungsvorrichtung 100 längs der Verbindungsrichtung 130 ergibt (siehe insbesondere Fig. 9).

Durch geeignete Ausgestaltung der Federelemente 146 können nach einem Lösen des Halteelements 140 die Bauteile 102, 104 insbesondere auch durch ein Verschieben in einer senkrecht zur Verbindungsrichtung 130 verlaufenden Richtung erneut voneinander gelöst werden. Alternativ kann auch eine permanente Festlegung in dieser Richtung unter Verwendung der Federelemente 146 vorgesehen sein.

Nachfolgend wird auf die in den Fig. 1 bis 10 dargestellte Ausführungsform der Federelemente 146 näher eingegangen, bei welchen insbesondere eine lösbare Verbindung derart vorgesehen ist, dass die Bauteile 102, 104 längs der Querrichtung 136 verschiebbar sind, um die Federelemente 146 insbesondere allein aufgrund der Bewegung der Bauteile 102, 104 relativ zueinander in den Grundkörper 122 hineinzubewegen und somit die Verbindung zwischen dem Verbindungselement 110 und dem Partnerverbindungselement 114 zu lösen.

Wie insbesondere aus den Fig. 1 und 8 hervorgeht, umfasst jedes Federelement 146 einen Federabschnitt 156, welcher an dem Grundkörper 122 des Verbindungselements 110 angeordnet ist und von demselben weg ragt.

Ferner umfasst jedes Federelement 146 einen Stabilisierungsabschnitt 158, welcher an dem Federabschnitt 156 des jeweiligen Federelements 146 angeordnet ist.

Der Stabilisierungsabschnitt 158 ragt dabei insbesondere von dem Federabschnitt 156 weg in Richtung des Grundkörpers 122.

Insbesondere erstreckt sich der Stabilisierungsabschnitt 158 ausgehend von einem dem Grundkörper 122 abgewandten Ende 160 des Federabschnitts 156 zumindest näherungsweise längs der Verbindungsrichtung 130 in Richtung des Grundkörpers 122, zumindest im entspannten Zustand des Förderelements 146.

An einem dem Grundkörper 122 zugewandten Ende 162 des Federabschnitts 156 ist dieser an dem Grundkörper 122 festgelegt. Insbesondere ist eine stoffschlüssige Verbindung vorgesehen.

Vorzugsweise sind das gesamte Federelement 146 und der Grundkörper 122 als einstückiges Kunststoff-Spritzgussbauteil ausgebildet.

Das dem Grundkörper 122 abgewandte Ende 160 des Federabschnitts 156 bildet insbesondere einen Übergangsbereich zwischen dem Federabschnitt 156 und dem Stabilisierungsabschnitt 158.

Vorzugsweise ist das dem Grundkörper 122 abgewandte Ende 160 des Federabschnitts 156 ein zumindest im entspannten Zustand des Federelements 146 maximal von dem Grundkörper 122 entfernter Teil des Federelements 146.

Dieses Ende 160 des Federabschnitts 156 bildet somit insbesondere einen Federvorsprung 164 des Federelements 146.

Der Federvorsprung 164 ist insbesondere eine Federkuppe 166. Mit dieser Federkuppe 166 liegt das jeweilige Federelement 146 an der Oberfläche 118 des Bauteils 104 an, wenn die Bauteile 102, 104 in einer senkrecht zur Verbindungsrichtung 130 verlaufenden Richtung relativ zueinander verschoben werden, bis schließlich die Federelemente 146 in die Öffnungen 148 eintauchen können.

Die Federkuppen 166 sind dabei insbesondere abgerundet oder abgeschrägt ausgebildet, um eine unerwünschte Beschädigung, insbesondere ein Verkratzen, der Oberfläche 118 möglichst zu vermeiden.

Ferner kann sich durch eine Abrundung oder Abschrägung der Federkuppe 166 und/oder durch eine Abrundung oder Abschrägung von sich an die Federkuppe 166 anschließenden Flanken 168 eines jeden Federelements 146 die bereits zuvor erwähnte Variation der Lösbarkeit der Verbindungsvorrichtung 100 ergeben.

Insbesondere dann, wenn die Federkuppe 166 und/oder sämtliche Flanken 168 schräg zur Verbindungsrichtung 130 ausgerichtet sind und dabei insbesondere Oberflächen aufweisen, welche längs Ebenen verlaufen, die sich auf einer dem Grundkörper 122 abgewandten Seite des Federelements 146 schneiden, können die Federelemente 146 einfach aus den Öffnungen 148 heraus und in den Grundkörper 122 hinein bewegt werden, insbesondere unabhängig davon, in welche senkrecht zur Verbindungsrichtung 130 verlaufende Richtung die Bauteile 102, 104 relativ zueinander verschoben werden.

Insbesondere dann, wenn einzelne Flanken 168 und/oder die Federkuppe 166 nur teilweise abgerundet oder abgeschrägt ausgebildet sind, kann eine Relativbewegung der Bauteile 102, 104 in einer oder mehreren senkrecht zur Verbindungsrichtung 130 verlaufenden Richtungen blockiert werden.

Günstig kann es sein, wenn mittels der Federelemente 146 gewährleistet werden kann, dass die Bauteile 102, 104 keiner weiteren Fixierung bedürfen, sobald die Federelemente 146 in die Öffnungen 148 eingetaucht sind. Lediglich zur abschließenden Montage muss dann vorzugsweise noch das optionale Halteelement 140 betätigt werden.

Die bevorzugte vorläufige Positionierung wird insbesondere durch hohe Federkräfte der Federelemente 146 gewährleistet.

Die Federelemente 146 umfassen hierfür vorzugsweise jeweils eine Blattfeder 170, welche insbesondere Bestandteil des Federabschnitts 156 ist oder durch diesen gebildet ist.

Die Blattfeder 170 umfasst insbesondere zwei Breitseiten 172, welche mittels zweier Schmalseiten 174 miteinander verbunden sind.

Beide Breitseiten 172 sowie beide Schmalseiten 174 verbinden zudem die Enden 160, 162 des Federabschnitts 156 miteinander.

Eine Breitseite 172 der Blattfeder 170 bildet vorzugsweise eine Oberseite 150 des Federabschnitts 156 und/oder zumindest einen Bestandteil einer Oberseite 150 des Federelements 146.

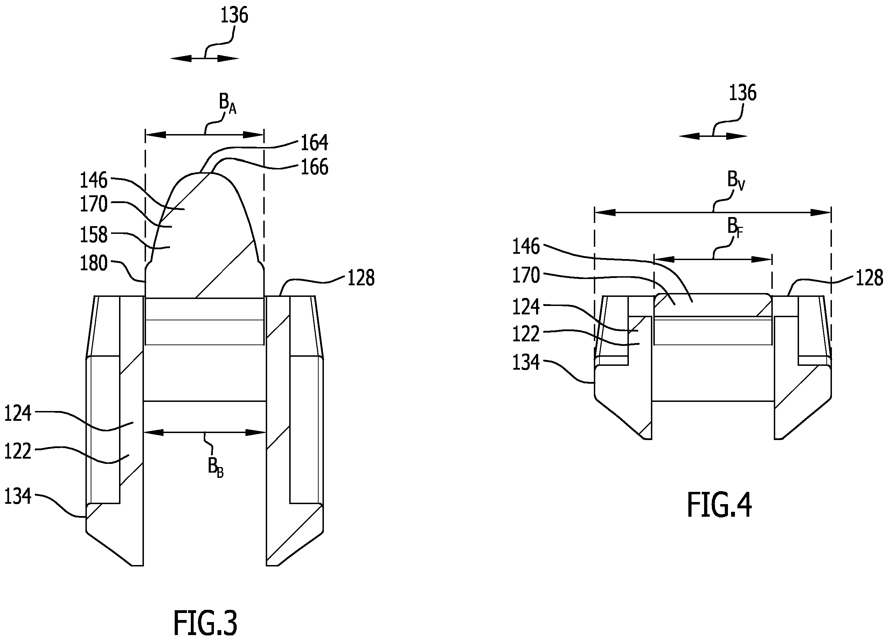

Wie beispielsweise der Fig. 4 zu entnehmen ist, erstreckt sich der Federabschnitt 156 des Federelements 146 vorzugsweise über eine Breite B_{F}, welche mindestens ungefähr 20 %, vorzugsweise mindestens ungefähr 30 %, einer Breite B_{V} des Verbindungselements 110 beträgt.

Die Breite ist dabei insbesondere eine maximale Erstreckung längs der Querrichtung 136.

Wie ferner beispielsweise den Fig. 1, 2, 8 und 9 zu entnehmen ist, sind die Seitenwandungen 132 des Grundkörpers 122 im Bereich des dem Grundkörper 122 zugewandten Endes 162 des Federabschnitts 156 mit jeweils zwei Ausnehmungen 176 versehen. Die Federabschnitte 156 können hierdurch besonders breit und zudem besonders lang ausgebildet werden, ohne dass die Seitenwandungen 132 im Wege wären. Dennoch ergibt sich eine Anordnung des jeweiligen Federelements 146 derart, dass das den Grundkörper 122 angeordnete Ende 162 des Federabschnitts 156 innerhalb einer Außenkontur des Grundkörpers 122 an demselben angeordnet ist.

Insbesondere ist eine Oberseite 150 des Federabschnitts 156 an dem dem Grundkörper 122 zugewandten Ende 162 bündig mit oder sogar unterhalb der Oberseite 128 des Grundkörpers 122.

In dem Grundkörper 122 sind ein oder mehrere, insbesondere zwei, Federaufnahmen 178 angeordnet, welche insbesondere der Aufnahme jeweils eines Federelements 146 dienen. Insbesondere ist in jeder Federaufnahme 178 exakt ein Federelement 146 aufnehmbar.

Wenn ein Federelement 146 in der Federaufnahme 178 angeordnet ist, ragt dieses insbesondere nicht mehr über eine Oberseite 128 des Grundkörpers 122 hervor. In einer solchen Stellung können somit insbesondere die Bauteile 102, 104 in senkrecht zur Verbindungsrichtung 130 verlaufenden Richtungen verschoben werden, ohne dass die Federelemente 146 diese Bewegung behindern würden.

Insbesondere dann, wenn die Federelemente 146 durch eine Relativverschiebung der Bauteile 102, 104 relativ zueinander betätigt werden, können sich starke Querkräfte ergeben, welche die Federelemente 146 insbesondere in einer Querrichtung 136 belasten und zu einer Beschädigung der Federelemente 146 führen können.

Die Federelemente 146 sind daher mit dem Stabilisierungsabschnitt 158 versehen, welcher insbesondere eine solche starke Belastung in der Querrichtung 136 verhindern soll.

Jeder Stabilisierungsabschnitt 158 weist hierfür vorzugsweise einen Fußabschnitt 180 auf.

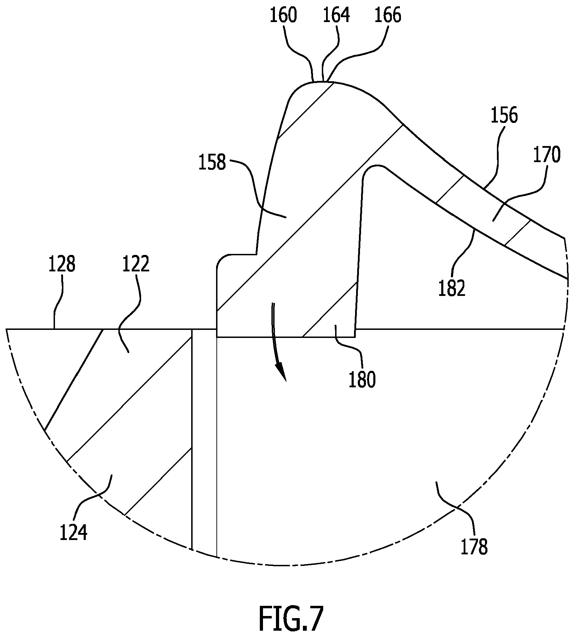

Mit diesem Fußabschnitt 180 ragt der Stabilisierungsabschnitt 158 und somit auch jedes Federelement 146 im entspannten Zustand eines jeden Federelements 146 bis in den Grundkörper 122, insbesondere in die Federaufnahme 178 des Grundkörpers 122, hinein (siehe insbesondere Fig. 7).

Der Fußabschnitt 180 weist dabei vorzugsweise eine Breite B_{A} auf, welche zumindest näherungsweise einer Breite B_{B} der Federaufnahme 178 entspricht, insbesondere jeweils in der Querrichtung 136 genommen (siehe Fig. 3).

Insbesondere beträgt die Breite B_{A} des Fußabschnitts 180 des Stabilisierungsabschnitts 158 mindestens ungefähr 95 %, vorzugsweise mindestens ungefähr 98 %, einer Breite B_{B} der zugehörigen Federaufnahme 178.

Dadurch, dass der Fußabschnitt 180 des Stabilisierungsabschnitts 158 stets in die Federaufnahme 178 hineinragt und/oder zudem ein sehr geringes Spiel innerhalb der Federaufnahme 178 hat, kann eine unerwünschte Seitwärtsbewegung des dem Grundkörper 122 abgewandten Endes 160 des Federabschnitts 156 bei einem Verschieben der Bauteile 102, 104 relativ zueinander in der Querrichtung 136 minimiert werden.

Folglich können auch hohe Feder- und/oder Haltekräfte realisiert werden, ohne eine Beschädigung der Verbindungsvorrichtung 100 und/oder der Bauteile 102, 104 im Falle eines beabsichtigten Lösens der Bauteile 102, 104 voneinander befürchten zu müssen.

Der Fußabschnitt 180 bildet insbesondere ein freies Ende des Federelements 146.

Das Federelement 146 ist vorzugsweise ausschließlich an dem dem Grundkörper 122 zugewandten Ende 162 des Federabschnitts 156 fest mit dem Grundkörper 122 verbunden.

Vorteilhaft kann es schließlich noch sein, wenn die Schmalseiten 174 des Federabschnitts 156 und/oder Kanten zwischen den Schmalseiten 174 und einer der Oberseite 150 gegenüberliegenden Unterseite 182 des Federabschnitts 156 abgeschrägt und/oder abgerundet ausgebildet sind. Hierdurch kann insbesondere ein unerwünschtes Verkanten des Federabschnitts 156 mit den Seitenwandungen 132 vermieden werden, wenn die Federelemente 146 in den Grundkörper 122 hineinfedern.

Bei weiteren (nicht dargestellten) Ausführungsformen der Verbindungsvorrichtung 100 können anstelle zweier Federelemente 146 auch nur ein einziges Federelement 146 oder sogar mehr als zwei Federelemente 146 vorgesehen sein.

Günstig aber nicht zwingend erforderlich kann es sein, wenn die Federelemente 146 bezüglich einer Quermittelebene 184 des Verbindungselements 110 spiegelsymmetrisch zueinander angeordnet und/oder ausgebildet sind.

Insbesondere sind die Federelemente 146 derart an dem Verbindungselement 110 angeordnet, dass sie ausgehend von zwei einander abgewandten Enden 186 des Grundkörpers 122 des Verbindungselements aufeinander zu ragen.

Es kann jedoch auch vorgesehen sein, dass zwei Federelemente 146 eines Verbindungselements 110 ausgehend von dem jeweiligen dem Grundkörper 122 zugewandten Ende 162 voneinander weg ragen.

In jedem Fall ergibt sich jedoch vorzugsweise durch die Verwendung mindestens eines Federelements 146 eine optimierte Positionierung der Bauteile 102, 104 relativ zueinander, insbesondere unter Ermöglichung einer Verschiebung der Bauteile 102, 104 relativ zueinander, während bereits die Oberflächen 116, 118 der Bauteile 102, 104 aneinander anliegen.

### Bezugszeichenliste

- 100: Verbindungsvorrichtung
- 102: erstes Bauteil
- 104: zweites Bauteil
- 106: Möbel
- 108: Objekt
- 110: Verbindungselement
- 112: Gegenstück
- 114: Partnerverbindungselement
- 116: Oberfläche
- 118: Oberfläche
- 120: Nut
- 122: Grundkörper
- 124: Gehäuse
- 126: Anlagefläche
- 128: Oberseite
- 130: Verbindungsrichtung
- 132: Seitenwandung
- 134: Haltevorsprung
- 136: Querrichtung
- 138: Durchtrittsöffnung
- 140: Halteelement
- 142: Betätigungsöffnung
- 144: Rotationsachse
- 146: Federelement
- 148: Öffnung
- 150: Oberseite
- 152: Haltekontur
- 154: zweite Haltekontur
- 156: Federabschnitt
- 158: Stabilisierungsabschnitt
- 160: Ende
- 162: Ende
- 164: Federvorsprung
- 166: Federkuppe
- 168: Flanke
- 170: Blattfeder
- 172: Breitseite
- 174: Schmalseite
- 176: Ausnehmung
- 178: Federaufnahme
- 180: Fußabschnitt
- 182: Unterseite
- 184: Quermittelebene
- 186: Ende

- Breite: B_{F}
- Breite: B_{V}
- Breite: B_{A}
- Breite: B_{B}

## Patentansprüche

1. Verbindungsvorrichtung (100), insbesondere zum Verbinden eines ersten Bauteils (102) mit einem zweiten Bauteil (104), beispielsweise zum Verbinden von Möbel- oder Maschinenteilen, und/oder zum Verbinden eines Bauteils (102, 104) mit einem Objekt (108), wobei die Verbindungsvorrichtung (100) Folgendes umfasst:
- ein Verbindungselement (110), welches einen in einem Bauteil (102, 104) anordenbaren Grundkörper (122) umfasst;
- ein oder mehrere Federelemente (146) zur Herstellung einer Verbindung mit einem Gegenstück, insbesondere zum Einbringen in eine oder mehrere Öffnungen (148) in einem Partnerverbindungselement (114),
wobei das eine oder die mehreren Federelemente (146) jeweils Folgendes aufweisen: einen Federabschnitt (156) und einen Stabilisierungsabschnitt (158),
wobei der Federabschnitt (156) von dem Grundkörper (122) weg ragt und wobei der Stabilisierungsabschnitt (158) sich ausgehend von dem Federabschnitt (156) in Richtung des Grundkörpers (122) erstreckt,
wobei der Grundkörper (122) mindestens eine Federaufnahme (178) zur Aufnahme mindestens eines Federelements (146) als Ganzes aufweist, so dass, wenn das Federelement (146) in der Federaufnahme (178) angeordnet ist, dieses nicht mehr über eine Oberseite (128) des Grundkörpers (122) hervorragt,
wobei das Verbindungselement (110) ein relativ zu dem Grundkörper (122) bewegliches Halteelement (140) zum lösbaren Verbinden des Verbindungselements (110) mit einem Partnerverbindungselement (114), insbesondere einem weiteren Verbindungselement (110), einem Objekt (108) und/oder einem Bauteil (102, 104), umfasst.

2. Verbindungsvorrichtung (100) nach Anspruch 1, **dadurch gekennzeichnet, dass** der Federabschnitt (156) von dem Grundkörper (122) weg ragt und an einem dem Grundkörper (122) abgewandten Ende (160) des Federabschnitts (156) an den Stabilisierungsabschnitt (158) angrenzt und dass der Stabilisierungsabschnitt (158) sich ausgehend von dem dem Grundkörper (122) abgewandten Ende (160) des Federabschnitts (156) in Richtung des Grundkörpers (122) erstreckt.

3. Verbindungsvorrichtung (100) nach einem der Ansprüche 1 oder 2, **dadurch gekennzeichnet,**
a) **dass** der Stabilisierungsabschnitt (158) sich in einem entspannten Zustand des Federelements (146) bis in den Grundkörper (122) hinein erstreckt; und/oder
b) **dass** ein dem Grundkörper (122) zugewandtes Ende (162) des Federabschnitts (156) des Federelements (146) in den Grundkörper (122) übergeht; und/oder
c) **dass** der Federabschnitt (156) als eine Blattfeder (170) ausgebildet ist.

4. Verbindungsvorrichtung (100) nach einem der Ansprüche 1 bis 3, **dadurch gekennzeichnet, dass** der Stabilisierungsabschnitt (158) des mindestens einen Federelements (146) in einer senkrecht zu einer Verbindungsrichtung (130) der Verbindungsvorrichtung (100) verlaufenden Richtung und/oder in einer Querrichtung (136) eine Breite (B_{A}) aufweist, welche mindestens ungefähr 90 %, insbesondere mindestens ungefähr 95 %, einer Breite (B_{B}) der zugehörigen Federaufnahme (178) beträgt.

5. Verbindungsvorrichtung (100) nach einem der Ansprüche 1 bis 4, **dadurch gekennzeichnet,**
a) **dass** der Federabschnitt (156) und der Stabilisierungsabschnitt (158) einstückig miteinander ausgebildet sind; und/oder
b) **dass** der Grundkörper (122) und das eine oder die mehreren Federelemente (146) einstückig miteinander hergestellt sind, insbesondere als einstückiges Spritzgussbauteil.

6. Verbindungsvorrichtung (100) nach einem der Ansprüche 1 bis 5, **dadurch gekennzeichnet, dass** der Federabschnitt (156) und der Stabilisierungsabschnitt (158) in einem Federvorsprung (164) des Federelements (146) ineinander übergehen, wobei der Federvorsprung (164) ein maximal von dem Grundkörper (122) entferntes Ende des Federelements (146) ist, wobei vorzugsweise vorgesehen ist, dass der Federvorsprung (164) eine Federkuppe (166) ist, welche insbesondere einseitig, zweiseitig, dreiseitig oder vierseitig abgerundet oder abgeschrägt ist.

7. Verbindungsvorrichtung (100) nach einem der Ansprüche 1 bis 6, **dadurch gekennzeichnet, dass** ein dem Grundkörper (122) zugewandtes Ende (162) des Federabschnitts (156) derart an dem Grundkörper (122) angeordnet ist, dass eine Oberseite (150) des Federabschnitts (156) an diesem Ende (162) zumindest näherungsweise parallel zu einer Oberseite (128) des Grundkörpers (122) ist, aus welcher das Federelement (146) hervorragt.

8. Verbindungsvorrichtung (100) nach einem der Ansprüche 1 bis 7, **dadurch gekennzeichnet, dass**
a) der Federabschnitt (156) zwei Breitseiten (172) und zwei Schmalseiten (174) aufweist, welche jeweils die beiden Enden (160, 162) des Federabschnitts (156) miteinander verbinden; und/oder
b) der Federabschnitt (156) in einem entspannten Zustand des Federelements (146) gekrümmt ausgebildet ist.

9. Verbindungsvorrichtung (100) nach einem der Ansprüche 1 bis 8, **dadurch gekennzeichnet, dass** eine Tangente, welche in einem entspannten Zustand des Federelements (146) an dem dem Grundkörper (122) abgewandten Ende (160) des Federabschnitts (156) an einer Breitseite (172), insbesondere Oberseite (150), des Federabschnitts (156) angelegt ist, mit einer Oberseite (128) des Grundkörpers (122), aus welcher das Federelement (146) hervorragt, einen Winkel von mindestens ungefähr 20 °, insbesondere mindestens ungefähr 30 °, und/oder höchstens ungefähr 70 °, vorzugsweise höchstens ungefähr 55 °, einschließt.

10. Verbindungsvorrichtung (100) nach einem der Ansprüche 1 bis 9, **dadurch gekennzeichnet, dass** eine Oberseite (150) des Federabschnitts (156) an einem dem Grundkörper (122) zugewandten Ende (162) des Federabschnitts (156) zumindest näherungsweise bündig mit einer Oberseite (128) des Grundkörpers (122) ist oder unterhalb einer Oberseite (128) des Grundkörpers (122) angeordnet ist.

11. Verbindungsvorrichtung (100) nach einem der Ansprüche 1 bis 10, **dadurch gekennzeichnet, dass** der Federabschnitt (156) in eine Außenkontur des Grundkörpers (122) hineinragt und dass eine oder mehrere seitlich an den Federabschnitt (156) angrenzende Seitenwandungen (132) des Grundkörpers (122) eine oder mehrere Ausnehmungen (176) aufweisen, welche insbesondere zumindest näherungsweise komplementär zu einer Form des Federabschnitts (156) in demjenigen Bereich ausgebildet sind, in welchem der Federabschnitt (156) in die Außenkontur des Grundkörper (122) hineinragt.

12. Verbindungsvorrichtung (100) nach einem der Ansprüche 1 bis 11, **dadurch gekennzeichnet, dass** eine dem Grundkörper (122) zugewandte Unterseite (182) des Federabschnitts (156) eine oder mehrere abgeschrägte oder abgerundete Kanten aufweist, insbesondere an einem oder an beiden Übergängen zwischen einer unteren Breitseite (172) des Federabschnitts (156) und einer oder beiden seitlichen Schmalseiten (174) des Federabschnitts (156).

13. Verbindungsvorrichtung (100) nach einem der Ansprüche 1 bis 12, **dadurch gekennzeichnet, dass** der Federabschnitt (156) an einem dem Grundkörper (122) zugewandten Ende (162) des Federabschnitts (156) eine Breite (B_{F}) aufweist, welche mindestens ungefähr 20 %, vorzugsweise mindestens ungefähr 30 %, einer maximalen Breite (B_{V}) des Grundkörpers (122) entspricht.

14. Verbindungsvorrichtung (100) nach einem der Ansprüche 1 bis 13, **dadurch gekennzeichnet,**
a) **dass** das Verbindungselement (110) zwei Federelemente (146) umfasst, welche bezüglich einer Quermittelebene (184) des Verbindungselements (110) zumindest näherungsweise spiegelsymmetrisch zueinander angeordnet und/oder ausgebildet sind: und/oder
b) **dass** die Verbindungsvorrichtung (100) ein Partnerverbindungselement (114) umfasst, welches eine oder mehrere Öffnungen (148) umfasst, welche zumindest näherungsweise komplementär zu einer Form einer Oberseite (150) des mindestens einen Federelements (146) ausgebildet sind; und/oder
c) **dass** die Verbindungsvorrichtung (100) das im verbundenen Zustand zweier Bauteile (102, 104) an einem ersten Bauteil (102) angeordnete Verbindungselement (110) und ein im verbundenen Zustand der Bauteile (102, 104) an dem zweiten Bauteil (104) angeordnetes Partnerverbindungselement (114) umfasst; und/oder
d) **dass** das Verbindungselement (110) und/oder ein Partnerverbindungselement (114) jeweils mit einem oder mehreren Haltevorsprüngen (134) versehen sind, die jeweils eine gekrümmte Abstützfläche aufweisen, welche in einem Längsschnitt kreisbogenförmig ist.

15. Möbelstück (106), umfassend mehrere Bauteile (102, 104) und eine oder mehrere Verbindungsvorrichtungen (100) nach einem der Ansprüche 1 bis 14.

## Claims

1. Connecting apparatus (100), in particular for connecting a first component (102) to a second component (104), for example for connecting furniture or machine parts, and/or for connecting a component (102, 104) to an object (108), wherein the connecting apparatus (100) comprises the following:
- a connecting element (110) which comprises a main body (122) which can be arranged in a component (102, 104);
- one or more spring elements (146) for establishing a connection to a counterpiece, in particular for introducing into one or more openings (148) in a partner connecting element (114),
wherein the one or more spring elements (146) each have the following: a spring portion (156) and a stabilizing portion (158),
wherein the spring portion (156) protrudes away from the main body (122), and wherein the stabilizing portion (158) extends in the direction of the main body (122) starting from the spring portion (156),
wherein the main body (122) has at least one spring support (178) for receiving at least one spring element (146) in its entirety, with the result that, when the spring element (146) is arranged in the spring support (178), it no longer protrudes beyond an upper side (128) of the main body (122),
wherein the connecting element (110) comprises a holding element (140), movable relative to the main body (122), for releasably connecting the connecting element (110) to a partner connecting element (114), in particular a further connecting element (110), an object (108) and/or a component (102, 104).

2. Connecting apparatus (100) according to Claim 1, **characterized in that** the spring portion (156) protrudes away from the main body (122) and, at an end (160) of the spring portion (156) which faces away from the main body (122), adjoins the stabilizing portion (158), and **in that** the stabilizing portion (158) extends in the direction of the main body (122) starting from that end (160) of the spring portion (156) which faces away from the main body (122).

3. Connecting apparatus (100) according to either of Claims 1 and 2, characterized
a) in that the stabilizing portion (158) extends as far as into the main body (122) in a relieved state of the spring element (146); and/or
b) in that an end (162), facing the main body (122), of the spring portion (156) of the spring element (146) merges into the main body (122); and/or
c) in that the spring portion (156) is configured as a leaf spring (170).

4. Connecting apparatus (100) according to one of Claims 1 to 3, **characterized in that** the stabilizing portion (158) of the at least one spring element (146) has a width (B_{A}) in a direction which runs perpendicularly with respect to a connecting direction (130) of the connecting apparatus (100) and/or in a transverse direction (136), which width is at least approximately 90%, in particular at least approximately 95%, of a width (B_{B}) of the associated spring support (178).

5. Connecting apparatus (100) according to one of Claims 1 to 4, **characterized**
a) **in that** the spring portion (156) and the stabilizing portion (158) are configured in one piece with one another; and/or
b) **in that** the main body (122) and the one or the plurality of spring elements (146) are produced in one piece with one another, in particular as a single-piece injection moulded component.

6. Connecting apparatus (100) according to one of Claims 1 to 5, **characterized in that** the spring portion (156) and the stabilizing portion (158) merge into one another in a spring projection (164) of the spring element (146), wherein the spring projection (164) is an end, at a maximum distance from the main body (122), of the spring element (146), wherein it is preferably provided that the spring projection (164) is a spring bump (166) which is rounded or bevelled, in particular, on one side, on two sides, on three sides or on four sides.

7. Connecting apparatus (100) according to one of Claims 1 to 6, **characterized in that** an end (162), facing the main body (122), of the spring portion (156) is arranged on the main body (122) in such a way that an upper side (150) of the spring portion (156) at this end (162) is at least approximately parallel to an upper side (128) of the main body (122), from which the spring element (146) protrudes.

8. Connecting apparatus (100) according to one of Claims 1 to 7, **characterized in that**
a) the spring portion (156) has two wide sides (172) and two narrow sides (174) which each connect the two ends (160, 162) of the spring portion (156) to one another; and/or
b) the spring portion (156) is of curved configuration in a relaxed state of the spring element (146).

9. Connecting apparatus (100) according to one of Claims 1 to 8, **characterized in that** a tangent which, in a relaxed state of the spring element (146), is applied at that end (160) of the spring portion (156) which faces away from the main body (122), on a wide side (172), in particular an upper side (150), of the spring portion (156), encloses an angle of at least approximately 20°, in particular at least approximately 30°, and/or at most approximately 70°, preferably at most approximately 55°, with an upper side (128) of the main body (122), from which the spring element (146) protrudes.

10. Connecting apparatus (100) according to one of Claims 1 to 9, **characterized in that** an upper side (150) of the spring portion (156) is at least approximately flush with an upper side (128) of the main body (122) at an end (162) of the spring portion (156) which faces the main body (122), or is arranged below an upper side (128) of the main body (122).

11. Connecting apparatus (100) according to one of Claims 1 to 10, **characterized in that** the spring portion (156) protrudes into an outer contour of the main body (122), and **in that** one or more side walls (132) of the main body (122) which adjoin the spring portion (156) laterally have one or more recesses (176) which are, in particular, of at least approximately complementary configuration with respect to a shape of the spring portion (156) **in that** region, in which the spring portion (156) protrudes into the outer contour of the main body (122).

12. Connecting apparatus (100) according to one of Claims 1 to 11, **characterized in that** a lower side (182) of the spring portion (156) which faces the main body (122) has one or more bevelled or rounded edges, in particular at one or at the two transitions between a lower wide side (172) of the spring portion (156) and one or the two lateral narrow sides (174) of the spring portion (156).

13. Connecting apparatus (100) according to one of Claims 1 to 12, **characterized in that**, at one end (162) of the spring portion (156) which faces the main body (122), the spring portion (156) has a width (B_{F}) which corresponds to at least approximately 20%, preferably at least approximately 30%, of a maximum width (Bv) of the main body (122).

14. Connecting apparatus (100) according to one of Claims 1 to 13, **characterized**
a) **in that** the connecting element (110) comprises two spring elements (146) which are arranged and/or configured at least approximately mirror-symmetrically with respect to one another with regard to a transverse centre plane (184) of the connecting element (110); and/or
b) **in that** the connecting apparatus (100) comprises a partner connecting element (114) which comprises one or more openings (148) which are of at least approximately complementary configuration with respect to a shape of an upper side (150) of the at least one spring element (146); and/or
c) **in that** the connecting apparatus (100) comprises the connecting element (110), arranged on a first component (102) in the connected state of two components (102, 104), and a partner connecting element (114), arranged on the second component (104) in the connected state of the components (102, 104); and/or
d) **in that** the connecting element (110) and/or a partner connecting element (114) are/is each provided with one or more holding projections (134) which each have a curved supporting surface which is circularly arcuate in a longitudinal section.

15. Furniture item (106), comprising a plurality of components (102, 104) and one or more connecting apparatuses (100) according to one of Claims 1 to 14.

## Revendications

1. Dispositif de liaison (100), notamment pour relier un premier composant (102) à un deuxième composant (104), par exemple pour relier des parties de meubles ou de machines, et/ou pour relier un composant (102, 104) à un objet (108), le dispositif de liaison (100) comprenant les éléments suivants :
- un élément de liaison (110), qui comprend un corps de base (122) pouvant être agencé dans un composant (102, 104) ;
- un ou plusieurs éléments de ressort (146) pour établir une liaison avec une contre-pièce, notamment pour être insérés dans une ou plusieurs ouvertures (148) dans un élément de liaison partenaire (114),
les un ou plusieurs éléments de ressort (146) présentant chacun les éléments suivants : une section de ressort (156) et une section de stabilisation (158),
la section de ressort (156) faisant saillie à partir du corps de base (122) et la section de stabilisation (158) s'étendant à partir de la section de ressort (156) en direction du corps de base (122),
le corps de base (122) présentant au moins un logement de ressort (178) pour recevoir au moins un élément de ressort (146) dans son ensemble, de telle sorte que lorsque l'élément de ressort (146) est agencé dans le logement de ressort (178), il ne fait plus saillie au-delà d'un côté supérieur (128) du corps de base (122),
l'élément de liaison (110) comprenant un élément de retenue (140) mobile par rapport au corps de base (122) pour relier de manière amovible l'élément de liaison (110) à un élément de liaison partenaire (114), notamment un autre élément de liaison (110), un objet (108) et/ou un composant (102, 104).

2. Dispositif de liaison (100) selon la revendication 1, **caractérisé en ce que** la section de ressort (156) fait saillie à partir du corps de base (122) et est adjacente à la section de stabilisation (158) à une extrémité (160) de la section de ressort (156) détournée du corps de base (122), et **en ce que** la section de stabilisation (158) s'étend à partir de l'extrémité (160) de la section de ressort (156) détournée du corps de base (122) en direction du corps de base (122).

3. Dispositif de liaison (100) selon l'une quelconque des revendications 1 ou 2, **caractérisé en ce que**
a) la section de stabilisation (158) s'étend jusqu'à l'intérieur du corps de base (122) dans un état détendu de l'élément de ressort (146) ; et/ou
b) une extrémité (162), tournée vers le corps de base (122), de la section de ressort (156) de l'élément de ressort (146) se raccorde au corps de base (122) ; et/ou
c) la section de ressort (156) est réalisée sous la forme d'un ressort à lame (170).

4. Dispositif de liaison (100) selon l'une quelconque des revendications 1 à 3, **caractérisé en ce que** la section de stabilisation (158) de l'au moins un élément de ressort (146) présente, dans une direction perpendiculaire à une direction de liaison (130) du dispositif de liaison (100) et/ou dans une direction transversale (136), une largeur (B_{A}) qui est au moins égale à environ 90 %, notamment au moins environ 95 %, d'une largeur (B_{B}) du logement de ressort (178) associé.

5. Dispositif de liaison (100) selon l'une quelconque des revendications 1 à 4,
**caractérisé en ce que**
a) la section de ressort (156) et la section de stabilisation (158) sont réalisées d'un seul tenant l'une avec l'autre ; et/ou
b) le corps de base (122) et les un ou plusieurs éléments de ressort (146) sont fabriqués d'un seul tenant l'un avec l'autre, notamment sous la forme d'un composant moulé par injection d'un seul tenant.

6. Dispositif de liaison (100) selon l'une quelconque des revendications 1 à 5, **caractérisé en ce que** la section de ressort (156) et la section de stabilisation (158) se raccordent dans une saillie de ressort (164) de l'élément de ressort (146), la saillie de ressort (164) étant une extrémité de l'élément de ressort (146) éloignée au maximum du corps de base (122), il étant de préférence prévu que la saillie de ressort (164) soit une calotte de ressort (166) qui est arrondie ou biseautée notamment d'un côté, des deux côtés, des trois côtés ou des quatre côtés.

7. Dispositif de liaison (100) selon l'une quelconque des revendications 1 à 6, **caractérisé en ce qu'**une extrémité (162) de la section de ressort (156) tournée vers le corps de base (122) est agencée sur le corps de base (122) de telle sorte qu'un côté supérieur (150) de la section de ressort (156) au niveau de cette extrémité (162) est au moins approximativement parallèle à un côté supérieur (128) du corps de base (122), à partir duquel l'élément de ressort (146) fait saillie.

8. Dispositif de liaison (100) selon l'une quelconque des revendications 1 à 7,
**caractérisé en ce que**
a) la section de ressort (156) présente deux côtés larges (172) et deux côtés étroits (174) qui relient respectivement entre elles les deux extrémités (160, 162) de la section de ressort (156) ; et/ou
b) la section de ressort (156) est réalisée de manière incurvée dans un état détendu de l'élément de ressort (146).

9. Dispositif de liaison (100) selon l'une quelconque des revendications 1 à 8, **caractérisé en ce qu'**une tangente qui, dans un état détendu de l'élément de ressort (146), est appliquée à l'extrémité (160) de la section de ressort (156) détournée du corps de base (122), sur un côté large (172), notamment un côté supérieur (150), de la section de ressort (156), forme avec un côté supérieur (128) du corps de base (122), à partir duquel l'élément de ressort (146) fait saillie, un angle d'au moins environ 20°, notamment d'au moins environ 30°, et/ou d'au plus environ 70°, de préférence d'au plus environ 55°.

10. Dispositif de liaison (100) selon l'une quelconque des revendications 1 à 9, **caractérisé en ce qu'**un côté supérieur (150) de la section de ressort (156) est au moins approximativement à fleur d'un côté supérieur (128) du corps de base (122) à une extrémité (162) de la section de ressort (156) tournée vers le corps de base (122) ou est agencée en dessous d'un côté supérieur (128) du corps de base (122).

11. Dispositif de liaison (100) selon l'une quelconque des revendications 1 à 10, **caractérisé en ce que** la section de ressort (156) fait saillie dans un contour extérieur du corps de base (122) et **en ce qu'**une ou plusieurs parois latérales (132) du corps de base (122) adjacentes latéralement à la section de ressort (156) présentent un ou plusieurs évidements (176) qui sont réalisés notamment de manière au moins approximativement complémentaire à une forme de la section de ressort (156) dans la zone dans laquelle la section de ressort (156) fait saillie dans le contour extérieur du corps de base (122).

12. Dispositif de liaison (100) selon l'une quelconque des revendications 1 à 11, **caractérisé en ce qu'**un côté inférieur (182) de la section de ressort (156) tourné vers le corps de base (122) présente un ou plusieurs bords biseautés ou arrondis, notamment au niveau de l'une ou des deux transitions entre un côté large inférieur (172) de la section de ressort (156) et l'un ou les deux côtés étroits latéraux (174) de la section de ressort (156).

13. Dispositif de liaison (100) selon l'une quelconque des revendications 1 à 12, **caractérisé en ce que** la section de ressort (156) présente, à une extrémité (162) de la section de ressort (156) tournée vers le corps de base (122), une largeur (B_{F}) qui correspond à au moins environ 20 %, de préférence à au moins environ 30 %, d'une largeur maximale (Bv) du corps de base (122).

14. Dispositif de liaison (100) selon l'une quelconque des revendications 1 à 13,
**caractérisé en ce que**
a) l'élément de liaison (110) comprend deux éléments de ressort (146) qui sont agencés et/ou réalisés au moins approximativement de manière symétrique l'un par rapport à l'autre par rapport à un plan médian transversal (184) de l'élément de liaison (110) ; et/ou
b) le dispositif de liaison (100) comprend un élément de liaison partenaire (114) qui comprend une ou plusieurs ouvertures (148) qui sont au moins approximativement complémentaires à une forme d'un côté supérieur (150) de l'au moins un élément de ressort (146) ; et/ou
c) le dispositif de liaison (100) comprend l'élément de liaison (110) agencé sur un premier composant (102) à l'état relié de deux composants (102, 104) et un élément de liaison partenaire (114) agencé sur le deuxième composant (104) à l'état relié des composants (102, 104) ; et/ou
d) l'élément de liaison (110) et/ou un élément de liaison partenaire (114) sont chacun pourvus d'une ou plusieurs saillies de retenue (134), qui présentent chacune une surface de support incurvée qui est en forme d'arc de cercle dans une coupe longitudinale.

15. Meuble (106), comprenant plusieurs composants (102, 104) et un ou plusieurs dispositifs de liaison (100) selon l'une quelconque des revendications 1 à 14.
